# EUROPEAN PATENT APPLICATION

(11) **EP 1 051 007 A2**
(43) Date of publication of application: **08.11.2000**
(21) Application number: 00109263.4
(22) Date of filing: 28.04.2000
(51) Int. Cl.: H04L 29/06, G06F 9/46

(54) **Data object encapsulation for data transmission to legacy computing systems**

(30) Priority: 29.04.1999 US 302232
(71) Applicant: Attachmate Corporation, Bellevue, Washington 98006 (US)
(72) Inventor: Foulkes, Jonathan, Big Canoe, Georgia 30143 (US); Steinmann, Frank, Alpharetta, Georgia 30202 (US)
(74) Representative: Grünecker, Kinkeldey, Stockmair & Schwanhäusser Anwaltssozietät

(57) **Abstract**

A class of data objects, enterprise data objects ("EDOs"), fully encapsulate all details of updating or retrieving host data for use in an application. EDOs make data available from a wide range of environments, including screen-based host data, customer information control system ("CICS") transactions, and database-sourced data. The EDO, a reusable distributed object, hides the details of data access, navigation paths, transition identifications, default input values, and security information, behind a transaction-oriented programming model. The EDO relays information from the host data source to a client application and back to the host Because of the functionality built into the EDO, programmers may work in terms of EDO properties and methods instead of fields on a host screen, for example. Programmers may also create compound EDOs that combine more than one underlying system, as well as hiding from the programmer any underlying requests from one system to another.

## Description

### TECHNICAL FIELD

The present invention relates to computer programming and, in particular, to computer programs that interface with enterprise computer programs, especially computer programs that communicate with legacy enterprise computer programs over a communications network.

### BACKGROUND OF THE INVENTION

The growth of the Internet presents software developers with new market demands and new options for publishing data stored on enterprise computing systems, such as mainframe computers and mid-range computers like IBM's AS/400 series. Enterprise computing systems refer to the entire computing system for a whole corporation, especially computing systems spanning across the various locations in which a corporation maintains offices. Thus, enterprise computing refers to the computing system of the whole corporate enterprise. Enterprise computing typically includes those computing applications upon which a corporation derives a great deal of its revenue, such as order entry, accounts receivable, payroll, and inventory. An enterprise network refers to systems such as wide area networks ("WANs"), local area networks ("LANs"), and Internet working bridges. An enterprise solution typically pertains to software that enables individuals and groups within a large corporation to use computers in a network environment to access information from a wide range of sources, collaborate on projects, and communicate easily with text, graphics, video, or sound.

Many corporations, and other large organizations, would like to develop applications that display, format, and manipulate data from their enterprise computing systems applications in ways that are not possible with the conventional character mode, screen-based applications available on their host computing systems. A teleprocessing computing system, such as that provided by screen-based host enterprise computing systems, refers to a computer program, network, or other computing element that remains in use after a business or organization has installed a newer system, such as a graphical user interface ("GUI") program. Each department within the corporation may wish to develop its own custom view of the enterprise data available on the host computing system. For example, the sales department may wish to view the enterprise data required for sales forecasting in a graphical format. The marketing department may wish to publish a sales catalog on an Internet web server and provide dynamically updated inventory information. The accounts receivable department may wish to sort payment records according to the amount owed or the length of time the balance has been outstanding. Such customization is cumbersome at best and perhaps impossible, using conventional screen-based host applications.

Many corporations would also like to migrate their data storage mechanisms to new computing environments without affecting the enterprise applications that rely upon the data. Screen-based host applications typically run on large to medium-size computing systems, such as IBM mainframes, IBM AS/400s, Unisys computers, and Digital VAX computing systems. Applications for such computing systems have typically been designed for use with character mode terminals and are based on individual screens. Character mode terminals, also known as text mode terminals or alphanumeric mode terminals, display letters, numbers, and other text characters but not graphical images or WYSIWYG ("what-you-see-is-what-you-get") character formatting, such as italics and superscript. Some conventional emulation systems have been developed that emulate character mode terminals on more modern PC-based computing systems in order to interface with host applications. However, these emulation systems are both cumbersome and limited in their capabilities.

In conventional computing systems, a screen-based application program accesses enterprise host computer data primarily through host terminal screens. The screen-based host interface, leftover from the early days of computing, has become outdated, unfamiliar, and cumbersome in the modern world of point-and-click GUI applications. In this new world of computing, many corporations want to transition from screen-based applications to user-friendly GUI applications without disrupting mission-critical business processes. This new computing environment challenges programmers to make sure that enterprise host information is manageable, secure, and consistently available to client computing systems. In a LAN or on the Internet, a client refers to a computer that accesses shared network resources provided by another computer, known as a server.

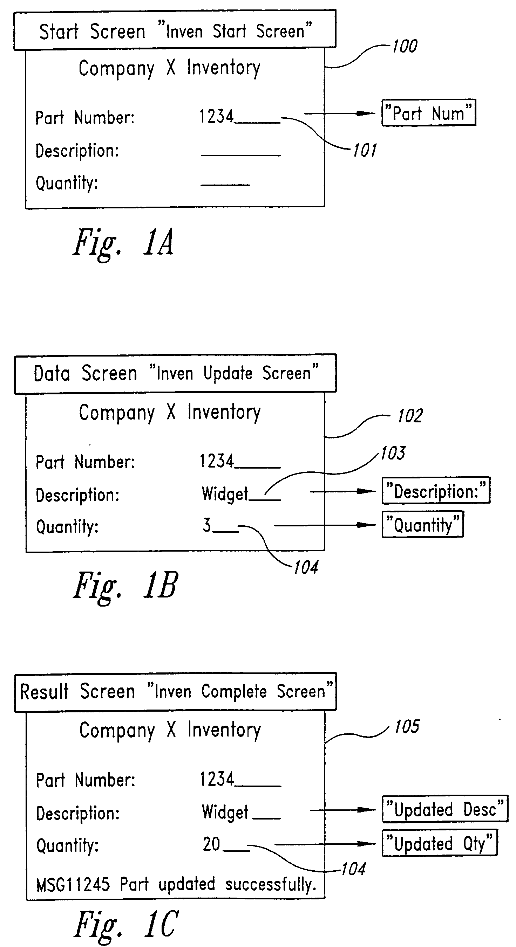

Figures 1A, 1B, and 1C illustrate a conventional screen-based software application having the kind of enterprise data that many corporations would like to display in a GUI format. Figure 1A provides a starting screen 100 that allows a user to enter a reference number for a part in inventory in a part number field 101. As shown in Figure 1A, the user has entered part number "1234." After making this entry to the part number field 101, the user then actuates an "enter" key that invokes processing by the host computer. Figure 1B illustrates a resulting data screen 102 for the part number "1234." The data screen 102 allows the user to view and update the information about a part in the corporation's inventory. For example, the data screen 102 shows that part number "1234" corresponds to a part described as "a widget" in a description field 103. If the user wishes to indicate an increase in the inventory quantity for part number "1234," the user enters the increased quantity in a quantity field 104. As shown in Figure 1B, the user has entered a "3" in the quantity field 104. After the user enters an increased quantity amount, the user actuates a key, such as a "PF" key, that causes the host computer to add the new quantity to the present quantity in inventory. As a result, the host computer displays a confirmation message at the bottom of a final screen 105 indicating that the update to the quantity field 104 was successful, as shown in Figure 1C. Figure 1C also shows that the quantity field 104 has been updated to a new quantity of "20."

Within an organization, such as a large corporation, different departments often need different types of enterprise data and need to display the enterprise data in different formats. While these departments rely on the company's information systems ("IS") professionals to maintain host systems and data, these departments typically depend upon their own departmental programmers to provide specialized data access and to design custom interfaces. The IS professionals typically maintain host systems and data, making sure these systems remain secure and readily available. In many corporations, the IS professionals are mainframe computer experts. In contrast, the departmental programmers typically have expertise using languages such as Visual Basic but are not familiar with the host terminal applications and the algorithms for screen scraping. Screen scraping refers to capturing data from screen-based applications, such as that shown in Figures 1A, 1B, and 1C and transporting the data to another application, such as one that displays the data in a GUI format.

Many conventional solutions to transporting data from screen-based host computers to GUI client applications require that the communication capabilities for transporting the data be available on the client computer. Unfortunately, these conventional approaches compromise mainframe security, creating security issues that many corporations are not willing to risk. Of course, the IS professionals could rewrite the existing legacy systems in a more modern format. However, rewriting many of these applications would be a major undertaking for most corporations, and one which they would prefer to avoid. Many legacy systems are based on mainframe computers that are being slowly replaced in many corporations by the client/server architectures discussed above. Compatibility with legacy systems is an important consideration when a new system is installed. For example, a newly installed spreadsheet software program should be able to read existing enterprise data records without an expensive and time-consuming conversion to a new format. Thus, many corporations require safe and efficient mechanisms for transitioning the data from their screen-based legacy enterprise computing systems to more modern and flexible computing systems in a cost-efficient manner that does not disrupt their business operations.

### SUMMARY OF THE INVENTION

Embodiments of the invention provide a class of data objects, enterprise data objects ("EDOs"), that encapsulate the details of updating and retrieving host data from an enterprise host computer program for use in another computer program, such as a computer program having a graphical user interface ("GUI"). EDOs make data available from a wide range of environments, including data from screen-based host applications, customer information control system ("CICS") transactions and other transaction processing systems such as IMS, and database-sourced data.

Embodiments of the invention provide a data structure for transferring data between legacy enterprise computing systems and modern, flexible computing systems, such as those employing a GUI. An EDO transaction object receives input data from a user application program for transmission to the legacy host computer program containing enterprise data. An EDO result object receives output data from the legacy host computer program that may then be retrieved by the user application program. An Execute method called on a transaction object invokes transmission of the input data from the EDO transaction object by an EDO connection object that communicates with the legacy host computer program using a session connection system. The EDO, a reusable distributed object, hides the details of data access, navigation paths, user identifications, transition identifications, default input values, and security information, behind a transaction-oriented programming model, according to an embodiment of the invention. The EDO may relay information from the legacy host application to a user application program and back again.

Embodiments of the invention are applicable to legacy host applications that utilize screen-based interfaces, CICS and IMS transactions, and database-sourced data. Embodiments of the invention also allow programmers to form compound EDOs. Compound EDOs allow a programmer to build an interface from a subset of the properties of its subordinate EDOs. The subordinate EDOs may combine data from more than one underlying host computing application, and frees the programmer from having to understand any underlying requests that travel from one system to another. The compound EDOs may comprise simple EDOs of multiple types, such as a simple transaction-based EDO combined with a simple screen-based EDO. Embodiments of the EDOs may also operate with tables of data, as well as individual data items.

Embodiments of the invention also provide an EDO authoring tool that produces EDOs through a visual development environment that eliminates a programmer's necessity for writing code to access the host data upon which the EDO relies. Thus, a programmer may author an EDO and then produce it for use without writing any code.

Embodiments of the invention also provide a new program development methodology that allows programmers to think in terms of EDO properties and methods instead of fields on a screen-based host application and to develop new programs according to this programming model.

### BRIEF DESCRIPTION OF THE DRAWINGS

A preferred embodiment of the present invention will be described below relative to the following Figures. Note that similar elements and steps in the Figures have the same reference number.
Figures 1A, 1B, and 1C illustrate a conventional screen-based software application having the kind of enterprise data that many corporations would like to display in a graphical user interface ("GUI") format.
Figure 2 depicts the functional relationships between the Enterprise Data Objects ("EDOs") and the other computing elements of an exemplary computing system associated with the invention.
Figure 3A illustrates an exemplary networked embodiment of the present invention.
Figure 3B illustrates an exemplary non-networked embodiment of the present invention.
Figure 4 illustrates elements of an exemplary EDO 201, according to an embodiment of the invention.
Figure 5A illustrates an exemplary authored transaction object 401, according to an embodiment of the invention.
Figure 5B illustrates an exemplary transaction object 402, according to an embodiment of the invention.
Figure 5C illustrates an exemplary connection object 430, according to an embodiment of the invention.
Figure 5D illustrates an exemplary authored result object 411, according to an embodiment of the invention.
Figure 5E illustrates an exemplary recordset object 403, such as that utilized by the transaction object 402 shown in Figure 5C and the result object 412 shown in Figure 5G.
Figure 5F illustrates an exemplary field object 405, such as that utilized by the fields collection 404 shown in Figure 5E.
Figure 5G illustrates an exemplary result object 412, such as that utilized by the authored result object 411 shown in Figure 5D.
Figure 5H illustrates an exemplary error object 432, such as that utilized by the connection object 430 shown in Figure 5C.
Figures 6A and 6B illustrate an exemplary data retrieval procedure using EDO, according to an embodiment of the invention.
Figures 7A and 7B illustrate an exemplary data update process using an EDO, according to an embodiment of the invention.
Figure 8 illustrates an exemplary compound EDO, according to an embodiment of the invention.
Figures 9A and 9B provide exemplary inventory status screens for tabular data for an inventory host computing application, according to an embodiment of the invention.
Figure 10 illustrates an exemplary CICS-type EDO 201, according to an embodiment of the invention.
Figure 11 provides an exemplary EDO applied to a user application operating over the Internet, according to an embodiment of the invention.
Figure 12 illustrates an exemplary EDO displayed in a Netscape/CORBA environment over the Internet, according to an embodiment of the invention.
Figure 13 illustrates an exemplary EDO authoring tool for creating EDOs, according to an embodiment of the invention.

### DETAILED DESCRIPTION OF THE INVENTION

Embodiments of the present invention simplify the creation of applications that rely upon enterprise data from legacy enterprise computing systems, such as screen-based host data, customer information control system ("CICS") or Information management system ("IMS") transaction data, and database-originated data. Embodiments of the present invention achieve these goals by providing a class of data objects, called Enterprise Data Objects ("EDOs"), that encapsulate the details of updating and retrieving host data. In an object-oriented program, an object, such as an EDO, is a variable comprising both routines and data that are treated as a discrete entity. Object-oriented programming is a well-known programming paradigm in which a program comprises a collection of discrete objects that are self-contained collections of data and routines that interact with other objects. The EDOs provided by embodiments of the present invention allow programmers to access their legacy enterprise data from modern computing applications, such as applications utilizing a graphical user interface ("GUI"), without modifying the legacy enterprise computing systems that provide the enterprise data.

Embodiments of the present invention also greatly facilitate the production of new programs for corporate enterprise computing environments. Suppose a first programmer works in a central corporate information systems ("IS") department and understands a host enterprise application built with a legacy screen-based interface. The first programmer performs the recording, referred to as a "navigation data source," of screens generated by the host application that will be referenced by EDOs in order to locate specific enterprise data items on the host application's screen-based interface. The first programmer may also produce a transaction repository, referred to as a "transaction data source," that describes the inputs and outputs of the host transactions. The first programmer, who may also be referred to as "an EDO author," may also develop, or author, a base set of EDOs that encapsulate all the screen navigations necessary for locating the enterprise data of interest.

Suppose a second programmer is either part of the IS department or, more likely, a programmer in a department that uses programs supported by the IS department. The second programmer may develop applications that use the simple EDOs produced by the first programmer, the EDO author. Either the first programmer or the second programmer may also create compound EDOs from the base set of EDOs created by the EDO author. The second programmer, who may be referred to as "an EDO programmer," may develop new applications without needing to know how the EDO actually retrieves data from the host application. Thus, the EDO programmer may create applications using a legacy host system's enterprise data without having to understand how to interface with the host system. This work breakdown model between the EDO author and the EDO programmer should also ensure more consistent and secure interfaces between EDOs and host applications. Of course, the present invention does not require any particular work differentiation model or scheme.

Using EDOs simplifies the development of new customized applications for retrieving enterprise data, as discussed. EDOs encapsulate all the details for retrieving and updating data on a host computing system. Once an EDO author has created an EDO for one application, the EDO may be reused in another application. An EDO programmer using an EDO does not need to know anything about how the EDO retrieves enterprise data from a host computing system. For example, an EDO programmer may build an entire suite of applications without knowing anything about the host screens from which the EDO accesses and retrieves the data processed by the suite of applications.

A simple EDO represents information from a single target data screen or a single transaction on a host computing system. Using a simple EDO, an EDO author may write a program that retrieves one or more data records from the target data screen or transaction on the host computing system. The EDO author may also build compound EDOs that access data from a group of simple EDOs or even other compound EDOs. By using a compound EDO, an application may retrieve data from several different screens on a single host application or even from several different screens on more than one host application. Screen-based EDOs may also be combined with transaction-based EDOs, such as CICS-type EDOs, to form compound EDOs. The EDO author may design the compound EDO to feed the results from one EDO as inputs to another EDO. In this manner, the EDO author may combine information from several different host screens on a single host computing system or even combine several different screens from multiple host computing systems into a single object, a compound EDO, that provides the EDO programmer with the requested host data without the EDO programmer necessarily needing to understand how the data has been retrieved.

Both simple and compound EDOs may exist as table EDOs for the retrieval of multiple records of information, according to an embodiment of the invention. Table EDOs may be used when the host applications supply more than one logical record of information on a terminal screen or transaction. For example, a customer order status screen might provide multiple records of information, where there are multiple records in the order form. These multiple records may reside on multiple pages (screens) of the customer order status screen.

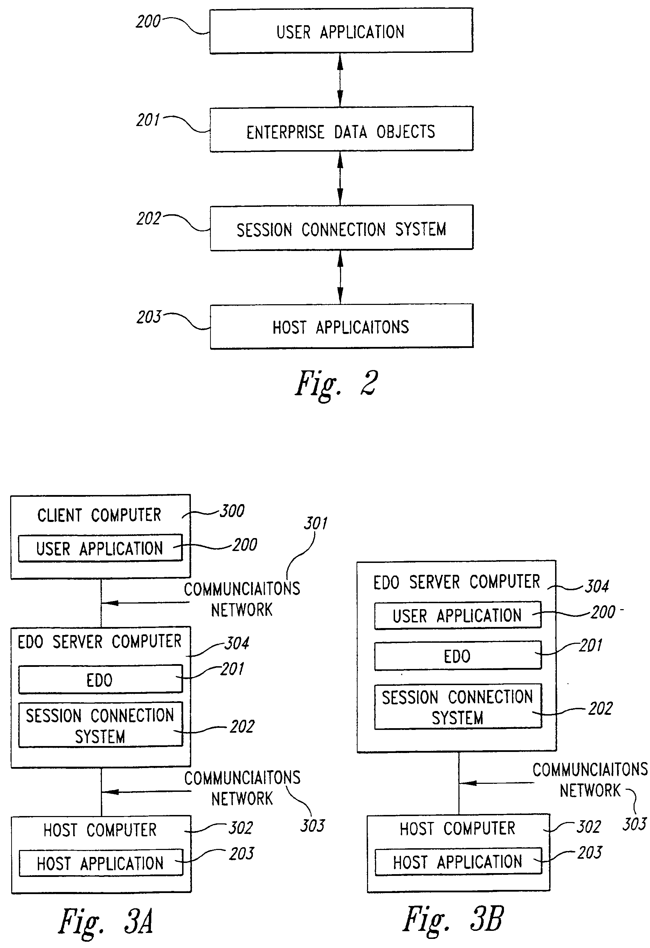

Figure 2 depicts the functional relationships between the EDOs and the other computing elements of an exemplary computing system associated with the invention. As shown in Figure 2, a user application 200 transmits and receives data from a host application 203 using EDOs 201 as a conduit for data passage. The host application 203 may be a screen-based application, a CICS application, or a database application. The EDOs 201 provide communications between the user application 200 and a session connection system 202 that transmits data to and from the host application 203. The user application 200 is typically a customer-written application that references the EDOs in its programming structure.

The session connection system 202 implements algorithms for establishing a host session with the host application 203 and for providing each user application 200, or client, with a connection to the host application 203. The EDOs 201 use the session connection system 202 to create a connection to a session on the host application 203. The session connection system 202 interfaces with the host application 203 and retrieves data or deposits data as directed by the EDOs 201. The session connection system 202 typically exists apart from any particular user application 200, or any particular host application 203, and may even be provided by a third party vendor. The session connection system 202 may also include a terminal emulation product necessary for efficiently accessing data from the host application 203.

Figure 3A illustrates an exemplary networked embodiment of the present invention. In this embodiment, the user application 200 utilizes an EDO such as the EDO 201 shown in Figure 2. The EDO 201 interfaces with a session connection system 202 that in turn interfaces with a host application 203. As shown in Figure 3A, the user application 200 operates on a client computer 300. The EDO 201 and the session connection system 202 operate on an EDO server computer 304. The user application 200 and the EDO 201 communicate over a communications network 301. The host application 203 operates on a host computer 302. The session connection system 202 and the host application 203 communicate over a communications network 303. The user application 200 may also utilize even more EDOs than shown in Figure 3A, including EDOs that collectively interface with a variety of host applications. As shown in Figure 3A, the EDO 201 does not necessarily need to operate on the same computer as the user application 200.

Figure 3B illustrates an exemplary non-networked embodiment of the present invention. In this embodiment, the user application 200 utilizes the EDO 201. The EDO 201 interfaces with a session connection system 202 that in turn interfaces with a host application 203. As shown in Figure 3B, the user application 200, the EDO 201 and the session connection system 202 operate on the EDO server computer 304. The host application 203 operates on the host computer 302. The session connection system 202 and the host application 203 communicate over the communications network 303. The user application 200 may also utilize even more EDOs than shown in Figure 3B, including EDOs that collectively interface with a variety of host applications. As shown in Figure 3B, the EDO 201 may operate on the same computer as the user application 200.

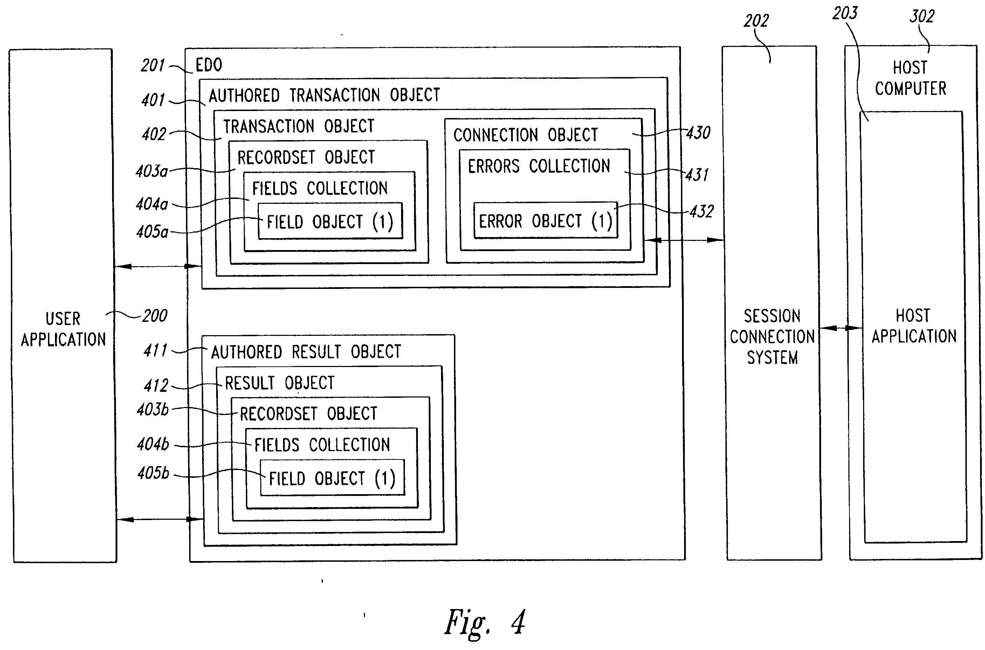

Figure 4 illustrates elements of an exemplary EDO 201, according to an embodiment of the invention. The EDO 201 comprises an authored transaction object 401, a connection object 430, and an authored result object 411. The authored transaction object 401 comprises a transaction object 402, a recordset object 403a, a fields collection 404a, and zero or more field objects 405a. The authored result object 411 comprises a result object 412, a recordset object 403b, a fields collection 404b, and zero or more field objects 405b. The connection object 430 comprises an errors collection 431 and zero or more error object 432.

The user application 200 utilizes the EDO 201 to perform data transactions with a host application, such as the host application 203. The EDO data model is based on a database table, with individual items appearing as fields in a row. Both the transaction object 402 and the result object 412 are comprised of recordset objects, a type of object that forms a table, known as a recordset table, having zero or more data field object collections. Each data field object collection represents a row in the recordset table. The recordset object 403a in the transaction object 402 represents a recordset table, and the fields collection 404a represents the field object collection for the a row in the recordset table. The fields collection 404a contains field objects, such as the field object 405a, that hold the values of the transaction inputs. EDO inputs may be accessed either directly through custom properties of the authored transaction object 401 or through the fields collection 404a of the transaction object's recordset object 403a. EDO outputs may be accessed either directly through custom properties of the authored result object 411 or through the fields collection 404b of the result object's recordset object 403b.

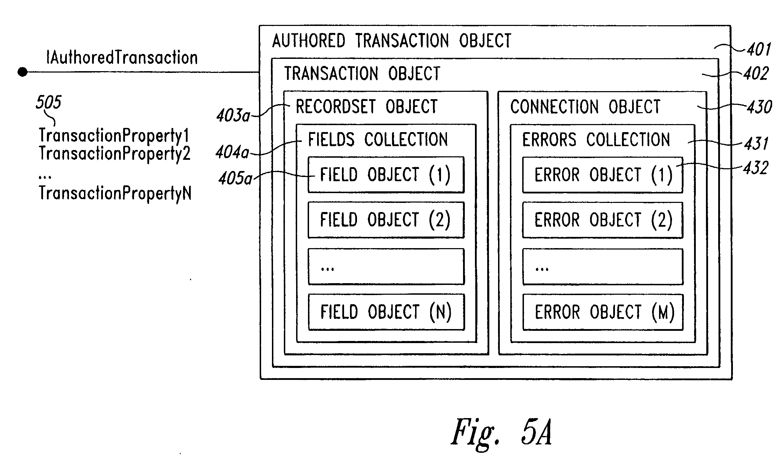

Figure 5A illustrates an exemplary authored transaction object 401, according to an embodiment of the invention. The authored transaction object 401 comprises a transaction property 505. A user application (*e.g*., the user application 200 shown in Figure 2) uses the transaction property 505 to provide data to a field object 405a.

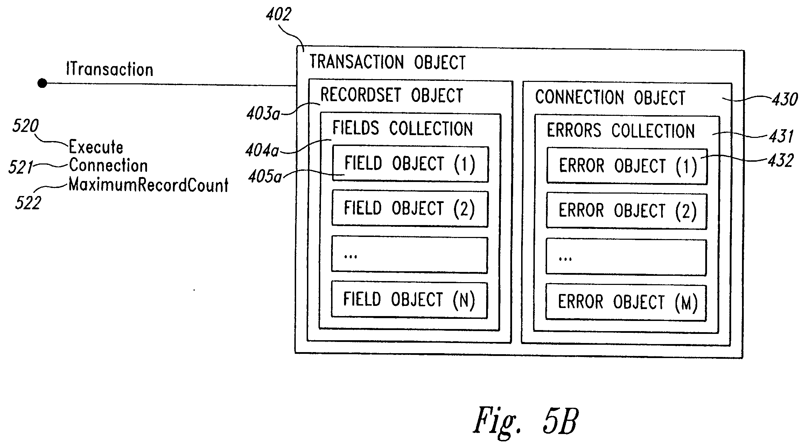

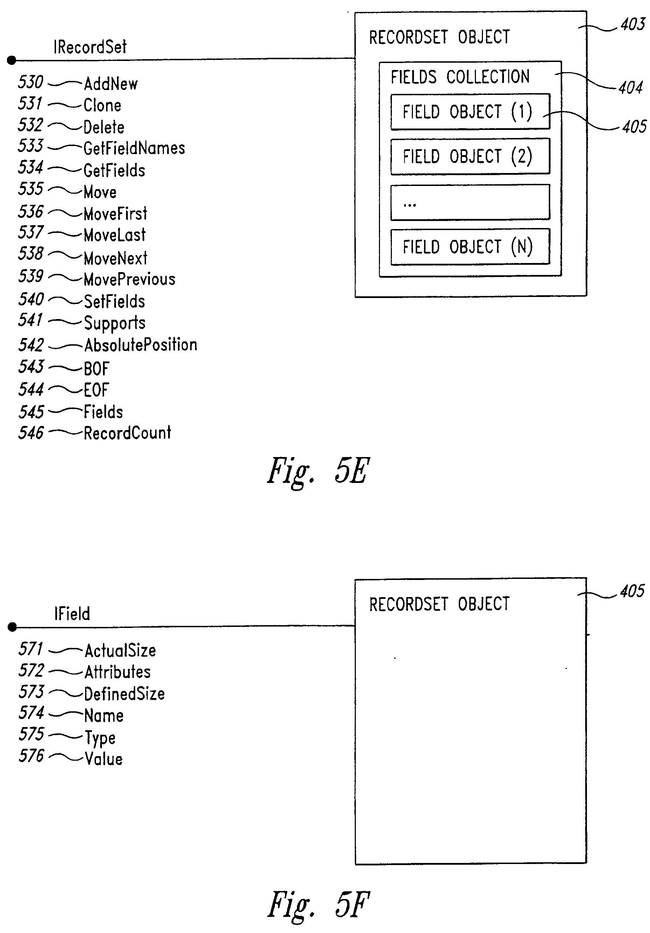

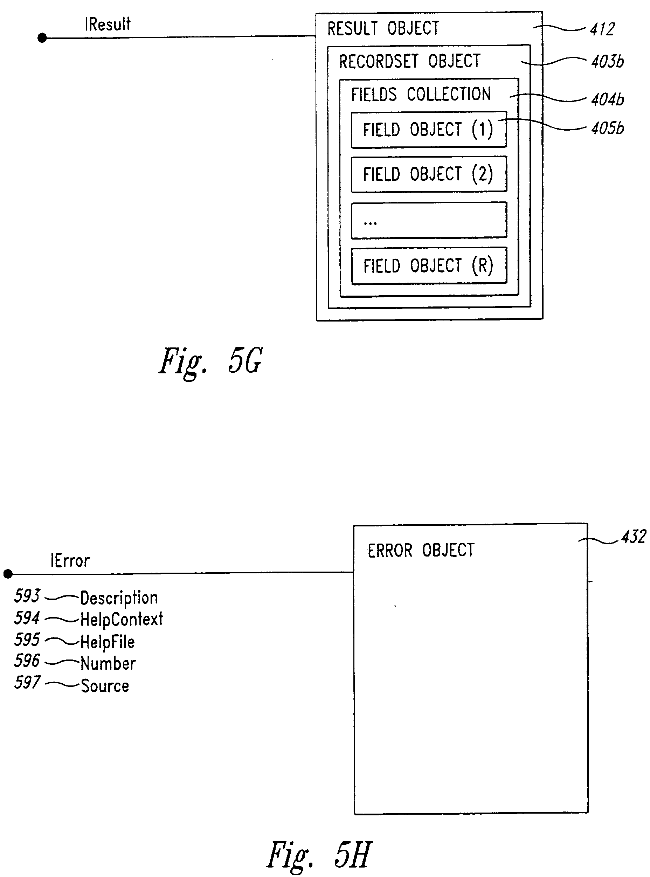

Figure 5B illustrates exemplary transaction object 402, according to an embodiment of the invention. The transaction object 402 comprises an Execute method 520. A user application (*e.g*., the user application 200 shown in Figure 2) uses the Execute method 520 to initiate the EDO's data transmissions. Transaction properties, such as the transaction property 505 shown in Figure 5A, do not directly access a host application when the Execute method 520 initiates a data transmission to and/or from the host application (such as the host application 203 shown in Figure 2). As will be discussed further below, the connection object 430 provides the EDO's access to host applications. The Transaction object 402 provides properties such as Connection 521 and MaximumRecordCount 522. The Connection property 521 enables retrieving or setting the reference to the Connection object 430. The MaximumRecordCount property 522 is set to a value indicating the maximum number of records to be returned in the Result object 412.

An authored transaction object, such as the authored transaction object 401, may comprise zero or more transaction properties, like the transaction property 505 shown in Figure 5A. A transaction object such as the transaction object 402, has one transaction property for each field object in the recordset object's fields collection. An exposed property in an EDO represents a data item in a host application that has been exposed to a user application, *e.g*., the user application 200 may supply a value for a part number (an exposed property) using the transaction property 505 on the authored transaction object 401. If the authored transaction object 401 has no exposed properties, then the EDO will not have the transaction property 505. For example, a transaction object may use default values to interact with the host application 203 instead of values received from the user application 200. The transaction recordset object 403a utilizes the fields collection 404a having the field object 405a to retain data provided by the transaction property 505. Of course, the authored transaction object 401 may include a different number of data fields, and the EDO may have a different number of transaction properties, depending upon the EDO's design.

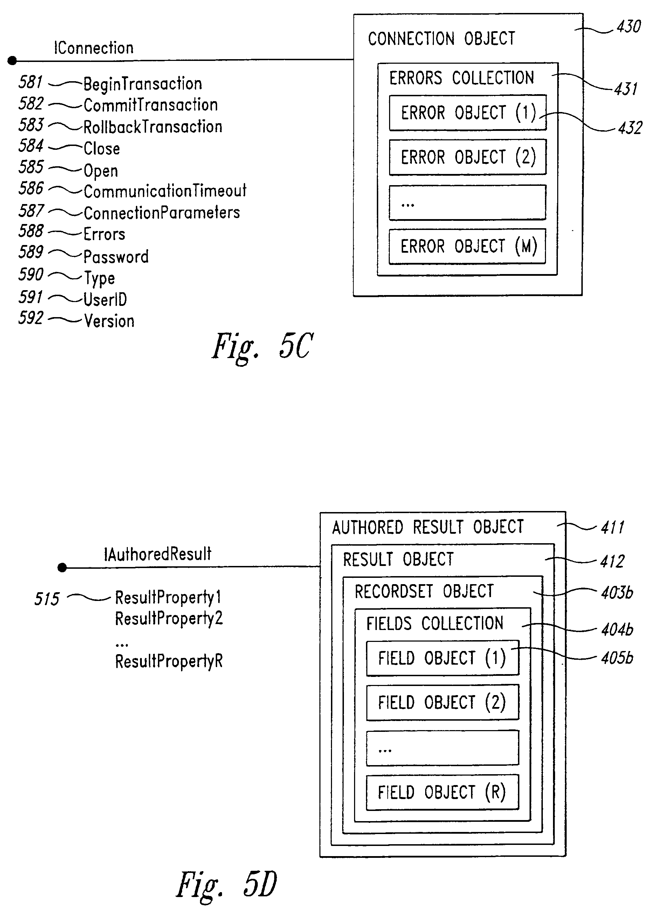

Figure 5C illustrates elements of an exemplary connection object 430, according to an embodiment of the invention. The connection object 430 further comprises an errors collection 431 and zero or more error objects 432.

The connection object 430 provides the EDO 201 with the ability to connect to and communicate with the host application 203. The connection object 430 establishes the connection with a specific host computing application. The connection object 430 makes use of a session connection system appropriate for the host computer to perform the actual data transmission and retrieval on the host computing application. For example, the connection object 430 may operate in cooperation with the session connection system 202 shown in Figure 2. Any errors reported by the connection object 402, or the transaction object 402, may be stored as error objects 432 for further analysis. The connection object 430 further provides the user application 200 with a capability for synchronizing the transactions of two or more EDOs with the host application 203.

Embodiments of the connection object 430 may utilize an Open method 585, a BeginTransaction method 581, a Close method 584, an Errors property 588, a CommitTransaction method 582, a RollbackTransaction method 583, a CommunicationsTimeout property 586, and a Type property 590. The Open method 585 opens a connection between the connection object 430 and a host application, such as the host application 203 shown in Figure 2. The BeginTransaction method 581 starts a data transaction with the host application 203. The Close method 584 closes the connection with the host application 203. The CommitTransaction method 582 saves any changes made to the host application 203 and ends the current transaction between the connection object 430 and the host application 203. The RollbackTransaction method 583 cancels any changes made to the host application 203 during the current transaction and, in the case of a compound EDO, ends the transaction on the connection objects of associated EDOs. The CommunicationsTimeout property 586 specifies how long the connection object 430 will wait while establishing a connection or executing a command before terminating the attempt and generating an error message. The ConnectionParameters property 587 contains the information used to establish a connection to a host session. The Password 589 and UserID 591 properties are used to supply login authentication information that may be needed by the connection. The Version property 592 is used to identify the specific version of the Connection object 430 interface. The Type property 590 specifies an EDO type for the connection object 430, such as a transaction-based EDO, a screen-based EDO, or a compound EDO. Of course, the EDO 201 may also utilize other methods and properties with regard to the connection object 430, including methods for specifying to which host application the connection object 430 will connect.

Figure 5D illustrates elements of an exemplary authored result object 411, according to an embodiment of the invention. The authored result object 411 includes zero or more result properties 515 and a result recordset object 403b. The transaction object 402 Execute method 520 creates the authored result object 411. Subsequently, the Execute method 520 sets the values of the field object 405b in the fields collection 404b. The Execute method 520 sets the values using data retrieved through the connection object 430 from the host application 203. The data values may be retrieved from a fields collection 404b by the user application 200 using the result property 515. The result object 412 may not exist initially and may be created by the transaction object's Execute method 520. Like the transaction property 505, the result property 515 does not directly access the host application 203. The authored result object 411 includes a result property for each field object in the recordset object's fields collection, but the EDO does not necessarily require that output from the host application be returned by an result object. Just as an EDO might not have a transaction property for an available input to the host application, an EDO also might not have a result property for an available output from the host application. The result recordset object 403b includes result data in the fields collection 404b having a field object 405b. The result recordset object 403b represent a recordset table, and the fields collection 404b is a field object collection, as described above. Of course, the result recordset object 403b may include a different number of field objects depending upon how the EDO has been authored. Moreover, the user application 200 may create more than one result object from a single transaction object by repeated calls to the Execute method 520.

The EDO 201 shown in Figure 4 is a simple EDO that operates as follows. EDO properties, such as the transaction property 505 (shown in Figure 5A), relay information from a client application, such as the user application 200, to the EDO 201. The EDO's Execute method (such as the Execute method 520 shown in Figure 5B) initiates the information exchange transaction between the client and host computers. As is well known, the host refers to the main computer in a system of computers or terminals connected by communication links. The client refers to a computer that accesses shared network resources provided by another computer, typically referred to as the server. In this embodiment of the invention, the computer containing the host has been configured to operate as a server. The Execute method 520 operates as a transaction executor invoking transmission of the input data from the transaction object 402 by the connection object 430 to the host application 203. As previously discussed, a simple EDO provides access to a single transaction on the host mainframe computer. Once the host application 203 has processed the input data, then the user application 200 may retrieve the result data from the EDO 201 using a result property, such as the result property 515 shown in Figure 5D. For screen-based EDOs, the result property 515 provides the result data, retrieved from either a data or final screen on the host application 203 to the user application 200.

A specific transaction and its result interfaces are derived from a base set of EDO interfaces. In object oriented programming, a parent class is referred to as the "base" class, and a child class is referred to as the "derived" class. The derived interfaces of the transaction and the result are specific to a particular host application and a specific transaction supported by the host application. For example, the base EDO interfaces do not include the transaction/result properties, such as the transaction property 505. The derived interfaces also enable the use of a virtual field. A virtual field may represent any type of data that the EDO author wishes to expose. For example, an EDO author may wish to convert the month/day/year fields provided by the host application 203 and convert these fields into a particular date format used by the user application 200. In the manner previously discussed, the user application 200 may call the result property 515 and/or the transaction property 505 associated with a virtual field. For example, in the case of the result property 515, the programming code in the authored transaction object 401 may perform specialized processing on the transaction data before returning it to the user application 200, such as the date conversion discussed above. A virtual field need not necessarily have a direct relationship with the data associated with the transaction.

The transaction object 402 and the result object 412 respectively implement the transaction and result properties. The implementation of these properties may callback to the user application 200 or generate an event that the user application 200 handles. However, in the case of a virtual field, the mechanism that is likely to be used involves encapsulating the implementation of the virtual field within the EDO 201 itself. For example, the EDO 201 may have an embedded Visual Basic Script ("VBScript") that implements the functionality associated with a virtual field. This approach frees each user application 200 that accesses the EDO 201 from having to provide its own implementation of the virtual field. The transaction property 505 for a virtual field may transform a localized data format of the user application 200 into a format required by the host application 203. Virtual fields may also be used to return or set data unrelated to the specific transaction between the user application 200 and the host application 203.

Figure 5E illustrates an exemplary recordset object and field collection, such as that utilized by the transaction recordset 402 and the result object 412 shown in Figure 4. A recordset object 403 may provide methods such as AddNew 530, Clone 531, Delete 532, GetFieldNames 533. GetFields 534, Move 535, MoveFirst 536, MoveLast 537, MoveNext 538, MovePrevious 539, SetFields 540, and Supports 541. The AddNew method 530 creates a new record in the recordset object 403. The Clone method 531 creates a duplicate recordset object 403 from an existing recordset object 403. The Delete method 532 deletes the current record of the recordset object 403. The GetFieldNames method 533 returns the names of all the fields in a record of the recordset object 403. The GetFields method 534 returns the values of selected fields from the current record of the recordset object 403. The Move method 535 relocates the current record position of the recordset object 403 relative to its present position. The MoveFirst method 536 relocates the current record position of the recordset object 403 to the first record. The MoveLast method 537 relocates the current record position of the recordset object 403 to the last record. The MoveNext method 538 relocates the current record position of the recordset object 403 to the next record position. The MovePrevious method 539 relocates the current record position of the recordset object 403 to the previous record position. The SetFields method 540 sets the values of selected fields in the current record of the recordset object 403. The Supports method 541 determines whether the recordset object 403 supports a particular type of functionality. A recordset object 403 provides properties such as an AbsolutePosition 542, a BOF 543, an EOF 544, Fields 545, and a RecordCount 546. The AbsolutePosition property 542 supports getting or setting the current record position of the recordset object 403. The BOF 543 property indicates if the current record position is before the first record of the recordset object 403. The 544 EOF property indicates if the current record position is after the last record of the recordset object 403. The Fields property 545 contains the fields collection for the current record of the recordset object 403. The RecordCount property 546 contains the number of records in the recordset object 403.

The recordset object 403 also includes an EDO fields collection 404. For a user application, such as the user application 200, the recordset object 403 represents a recordset of host data. When utilized as an transaction object, such as the transaction object 402 shown in Figure 4, the recordset object 403a provides a recordset of input values to a host computing application, such as the host application 203. When utilized as an result object such as the result object 412 shown in Figure 4, the recordset object 403b provides a recordset of output values from the host application 203 that are available to a user application, such as the user application 200.

Figure 5F illustrates an exemplary Field object 405, such as that utilized by the transaction object fields collection 404a shown in Figure 5B, and the result object fields collection 404b shown in Figure 5G. The field object 405 provides properties such as an ActualSize 571, Attributes 572, DefinedSize 573, a Name 574, a Type 575 and a Value 576. The ActualSize property 571 indicates the current size of the stored Value 576. The Attributes 572 property indicates the properties of the field, such as whether it's of fixed size, requires input or any other distinctive characteristics. The DefinedSize 573 property indicates the initially defined size for the stored Value 576. The Name property 574 contains the user-defined name for this field object 405. The Type property 575 indicates the specific type of data contained in this field. Examples of type could be: Numeric, String, Date or Boolean. The value property 576 contains the actual data value for this field.

Figure 5H illustrates an exemplary Error object 432, such as that utilized by the Connection object 430 Errors collection 431 shown in Figure 5C. The Error object 432 provides properties such as an Description 593, HelpContext 594, HelpFile 595, a Number 596 and a Source 597. The Description property 593 contains the text describing a specific instance of an error. The HelpContext 594 property indicates the help topic associated with an EDOError. The HelpFile 595 contains the name of the file in which the HelpContext 594 can be found. The Number property 596 indicates the number that uniquely identifies an EDOError. The Source property 597 indicates the name of the object or application that originally generated the error.

As previously discussed, Figure 5A illustrates an exemplary authored transaction object 401, according to an embodiment of the invention. The EDO author creates each authored transaction object 401 for a particular set of data items on a host application, such as the host application 203. The EDO author derives a custom interface for each authored transaction object 401 to represent the inputs to the transaction from a base transaction object 402. All authored transaction objects may utilize the properties of the base transaction object 402. The properties of a derived authored transaction object 401 may also provide transaction inputs to the host application 203.

Both the fields collection 404a, shown in Figure 4, and the properties in the derived authored transaction object 401 represent transaction outputs. Each transaction property 505 (shown in Figure 5A) of the authored transaction object 401 has a corresponding field in the recordset object's fields collection 404a. The recordset object's fields collection 404a represents one record in the recordset. Accordingly, data in the recordset object's fields collection 404a may be accessed either directly through one of the authored transaction object 401 properties, or by obtaining one of the fields in the recordset object's fields collection 404a.

As previously discussed, the transaction object 402 represents the input values for a particular transaction with the host application 203. The transaction object 402 has a single Execute method 520 that initiates the transaction. The completed Execute method 520 results in the return of an authored result object, such as the authored result object 411, that contains the output of the transaction in a result recordset object, such as the result recordset object 403b shown in Figure 4.

As previously discussed, Figure 5D illustrates an exemplary authored result object 411, according to an embodiment of the invention. The EDO author creates each authored result object 411 for a particular set of data items on a host application, such as the host application 203. The EDO author derives a custom interface for each authored result object 411 to represent the output of the transaction from a base result object 412. All authored result objects may utilize the properties of the base result object 412. The properties of a derived authored result object 411 may also provide transaction outputs from the host application 203.

Both the fields collection 404b, shown in Figure 5D, and the properties in the derived authored result object 411 represent transaction outputs. Each result property 515 of the authored result object 411 has a corresponding field in the recordset object's fields collection 404b. The recordset object's fields collection 404b represents one record in the recordset. Accordingly, data in the recordset object's fields collection 404b may be accessed either directly through one of the authored result object 401 properties, or by obtaining one of the fields in the recordset object's fields collection 404a.

As discussed above, the object encapsulation mechanism provided by embodiments of the present invention simplify an EDO programmer's task by shielding the EDO programmer from the details of how the data is actually accessed from the legacy host application by the EDO. Embodiments of the present invention also make the deployment of the access methods scaleable.

The various EDOs types do not require a terminal emulation product or a corresponding terminal user interface. Choices regarding an appropriate user interface may be left to the user application, such as the user application 200. Accordingly, EDOs may operate in conjunction with a terminal emulation product that performs without terminal user interface elements. A suitable emulation product, such as the Host Access server product sold by the Attachmate Corporation, provides all of the data steam and keystroke processing facilities and eliminates the overhead associated with providing a terminal screen graphical display.

These embodiments of the invention allow EDO programmers to implement applications other than pure emulation display screens on top of a lightweight host communications platform. Thus, EDO programmers using this emulation system may develop applications that display, format, and manipulate the data from legacy host applications in ways that are not possible in the applications from which the data is retrieved. For example, a program may be written using EDOs that allows the sales department to view the enterprise data associated with sales forecasting in a graphical format that would not be possible using the legacy host application that provides the data. Using EDOs, a marketing department programmer may write a program that publishes a sales catalog on a web server and includes dynamically updated inventory information. An EDO programmer in the accounts receivable department may write a program using EDOs that sorts payment records in ways not possible with the corporation's legacy computing system. In summary, each of these corporate departments may develop its own, customized view of the corporation's enterprise data.

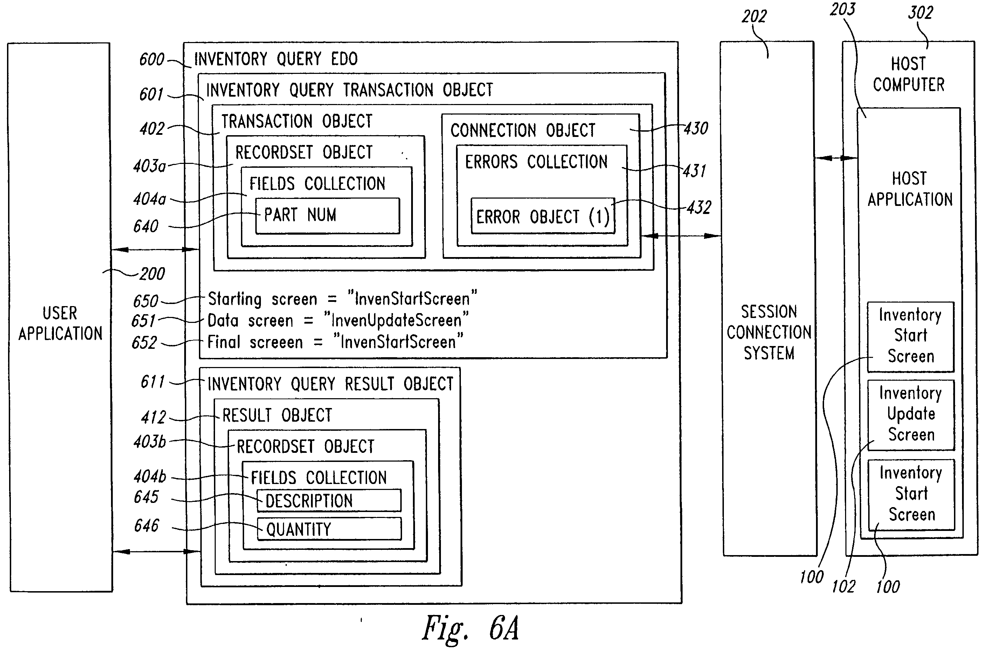

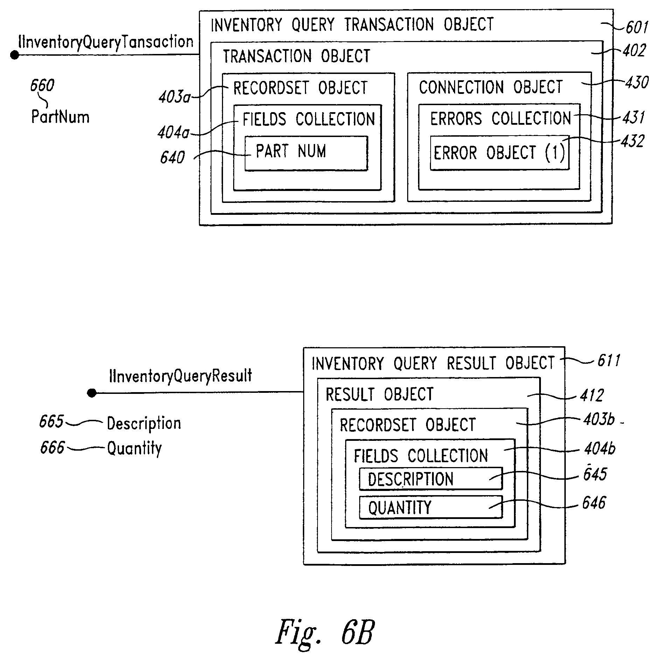

Figures 6A and 6B illustrate an exemplary data retrieval procedure using an EDO, according to an embodiment of the invention. The user application 200 performs a procedure for obtaining the description of a part from an inventory database using an inventory query EDO 600. The inventory query EDO 600 comprises an inventory query transaction object 601, an authored transaction object and inventory query result object 611, an authored result object. The user application 200 setting a value in a PartNum 660 transaction property shown in Figure 6B causes the inventory query transaction object 601 to set the value of the field object 640 named "PartNum." The user application 200 calling the Execute method 520 causes the inventory query transaction object 601 to execute its defined transaction with the host application 203. The Execute method 520 calls the connection object's Open method 585 to open a connection with the host application 203. The host transaction performed by inventory query transaction object 601 includes access to a starting screen 650 having the name "InvenStartScreen," a data screen 651 having the name "InvenUpdateScreen," and a final screen 652 having the name "InvenStartScreen." On the transition from the starting screen 650 to the data screen 651 the value of the field object 640, named "PartNum," is supplied as an input to the host application's Inventory Start Screen 100 PartNum field 101. The data on the host application's Inventory Update Screen 102 Description field 103 and the Quantity field 104 are returned as outputs to set the values of a field object 645, named "Description," and a field object 646, named "Quantity," respectively. The Execute method 520 calls the connection object's 430 Close method 584 to close the connection with the host application 203. The user application 200 getting the value of a Description 665 transaction property shown in Figure 6B causes the inventory query result object 611 to return the value of the field object 645 named "Description." The user application 200 getting the value of a Quantity result property 666 shown in Figure 6B causes the inventory query result object 611 to return the value of the field object 646 named "Description."

In this exemplary embodiment, the EDO connection object 430 utilizes a session connection system 202 to navigate to a starting screen 100 named "InvenStartScreen" that serves as a starting screen for inventory data in the host application 203. The user application 200 calls the Execute method 520 on the inventory query transaction object 601 which in turn uses the connection object 430 and the session connection system 202 to perform the transaction. The session connection system 202 has methods and properties that the connection object 430 uses to navigate the host application to particular screens, transfer transaction inputs to the screens and transfer the result outputs from the screens. The connection object 430 invokes a method on the Session Connection System 202 that actually directs the host application 203 to the starting screen 650. With a connection established between the user application 200 (the client) and the host application 203, the inventory query transaction object 402 transmits the particular part number ("PartNum") of interest to the starting screen 100.

Invoking the Execute method 520 actually causes three navigations, one to a starting screen, a second to a data screen from which the result outputs may be collected, and a third to a final screen. An exemplary starting screen, data screen, and final screen have been discussed with regarding to Figures 1A-1C. As previously discussed, the transaction/result properties do not directly access host screens, with the connection object 430 controlling data transfers to and from the host application 203. The result recordset object 611 includes a fields collection 404b. The fields collection 404b shown in Figure 6A includes a field object 645, named "Description" that receives the "description" provided by the data screen 102 following invocation of the Execute method 520. The user application 200 may get the value for the Quantity 666, result property, which is a "quantity" provided by the data screen 102. The quantity data may be retrieved from an field object 646, named "Quantity," in the fields collection 404b.

The user application 200 may instantiate both an EDO recordset, such as the inventory query transaction object 601, and a connection object such as the connection object 430, without requiring any interaction with the session connection system 202. The session connection system 202 does not need to be created until invocation of the Open method 585 associated with the connection object 430. The connection object 430 implements an EDO connection interface that specifies the Open method 585 and the Close method 584. The connection object 430 also provides the transaction object 402 access to the session connection system 202. In other words, the connection object 430 instantiates a session interface that specifies a method or methods for navigation to the terminal screens of the host computing application.

Table 1 illustrates exemplary programming code for creating an inventory query transaction object Of course, EDOs may be invoked from any programming language. In lines 4-5, the programming code creates an inventory query transaction object, such as the inventory query transaction object 601 shown in Figure 6A. Creation of the inventory query transaction object 601 also instantiates the connection object 430.

The program sets the required part number ("1234") into the transaction property PartNum on line 8. The program calls the Execute method 520 on line 12, which performs the transaction and returns the result recordset object. On lines 17 through 21 the program then validates the retrieved quantity from the result recordset object for the specified part number ("1234") and computes an adjusted value based on a quantity taken from inventory.

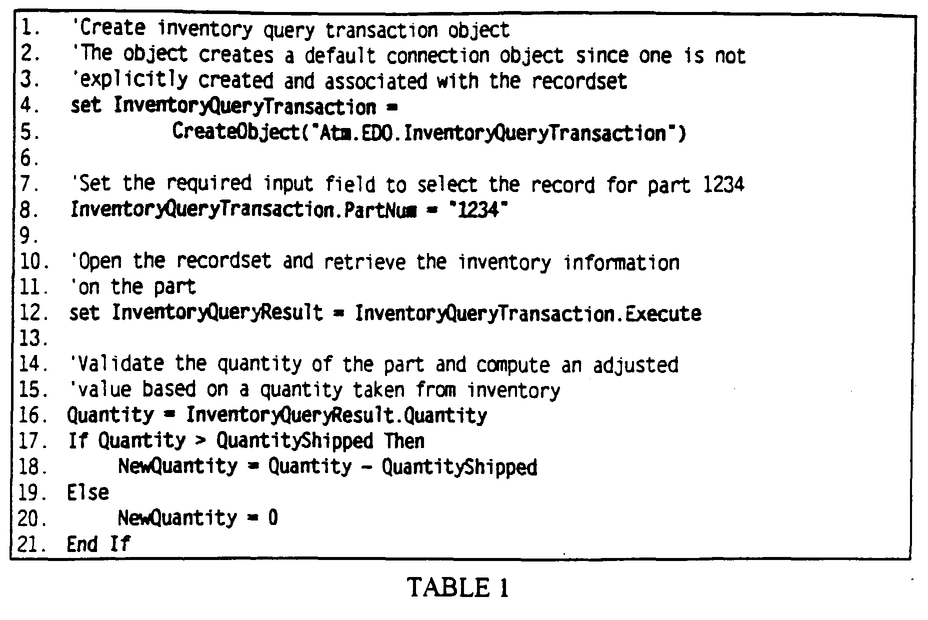

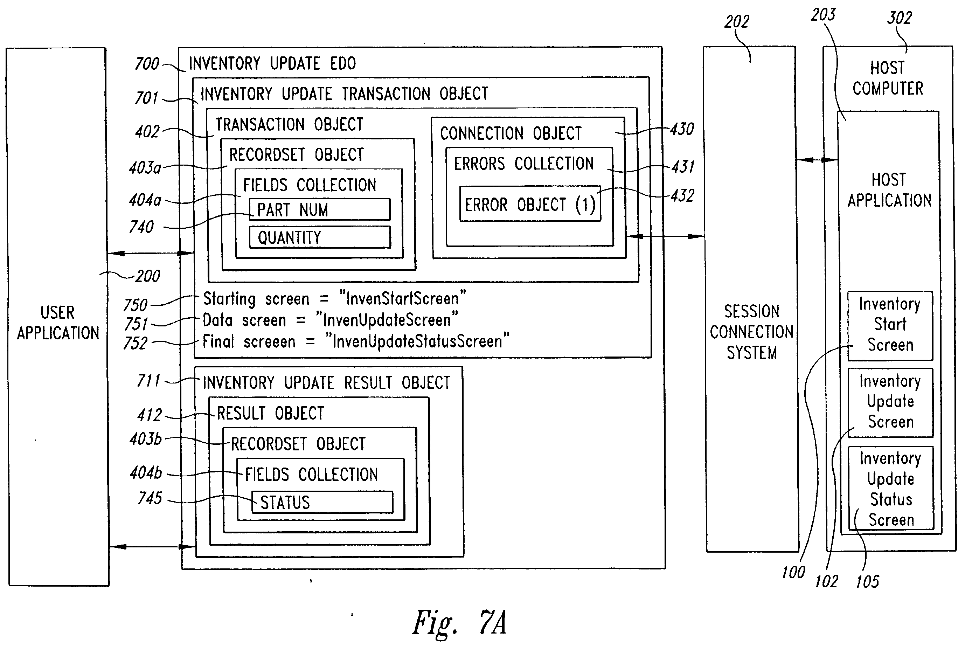

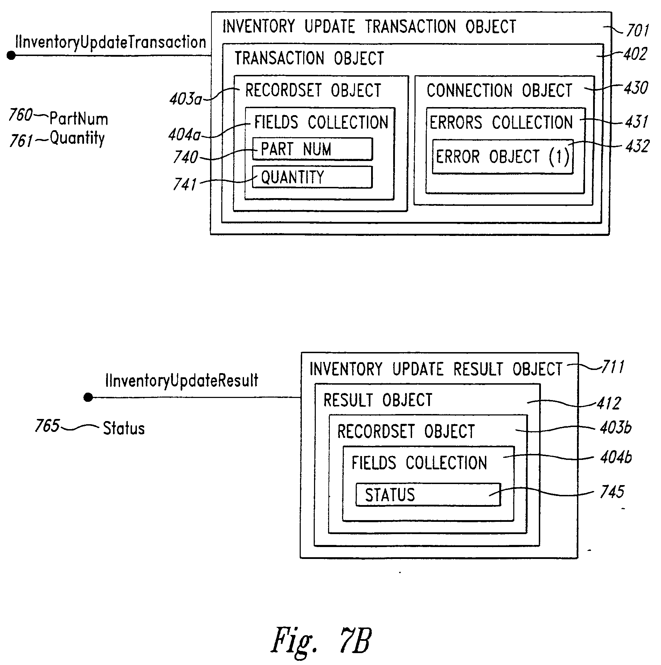

Figures 7A and 7B illustrate an exemplary data update process using an EDO, according to an embodiment of the invention. The user application 200 performs a procedure for updating the quantity of a part number in an inventory database using an EDO 700. The EDO 700 comprises an inventory update transaction object 701, an authored transaction object, and an inventory update result object 711, and an authored result object. The user application 200 setting a value in the PartNum transaction property 760 causes the inventory update transaction object 701 to set the value of the field object 740 named "PartNum." The user application 200 setting a value in a Quantity 761 transaction property causes the inventory update transaction object 701 to set the value of the field object 741 named "Quantity." The user application 200 calling the Execute method 520 causes the inventory update transaction object 701 to execute its defined transaction with the host application 203. The Execute method 520 calls the connection object's Open method 585 to open a connection with the host application 203. The host transaction performed by inventory update transaction object 701 includes access to a starting screen 750 having the name "InvenStartScreen," a data screen 751 having the name "InvenUpdateScreen," and a final screen 752 having the name "InvenUpdateStatusScreen". On the transition from the starting screen 750 to the data screen 751 the value of the field object 740, named "PartNum" is supplied as an input to the host application's Inventory Start Screen 100 PartNum field 101. On the transition from the data screen 751 to the final screen 752 the value of the field object 741, named "Quantity", is supplied as an input to the host application's Inventory Update Screen 102 Quantity field 104. The data on the host application's Inventory Update Status Screen 105 Status field 106 is returned as an output to set the value of a field object 745, named "Status." The Execute method 520 calls the connection object's 430 Close method 584 to close the connection with the host application 203. The user application 200 getting the value of a Status result property 765 shown in Figure 7B causes the inventory update result object 711 to return the value of the field object 745 named "Status."

Table 2 illustrates exemplary programming code for creating an inventory update transaction object such as the inventory update transaction object 701 shown in Figure 7A. EDOs may be invoked from any programming language, as previously discussed. In lines 4-5, the programming code creates an inventory update transaction object such as the inventory update transaction object 701. Creation of the inventory update transaction object 701 also instantiates the connection object 430.

The program sets the required part number ("1234") into the transaction property PartNum on line 8. The program sets the required quantity ("NewQuantity") into the transaction property PartNum on line 11 into the transaction property.

The program calls the Execute method 520 on line 14, which performs the transaction and returns the result recordset object 711. On lines 18 through 20 the program then verifies that the records for the part number ("1234") have been updated by examining value from value retrieved from updated quantity variable.

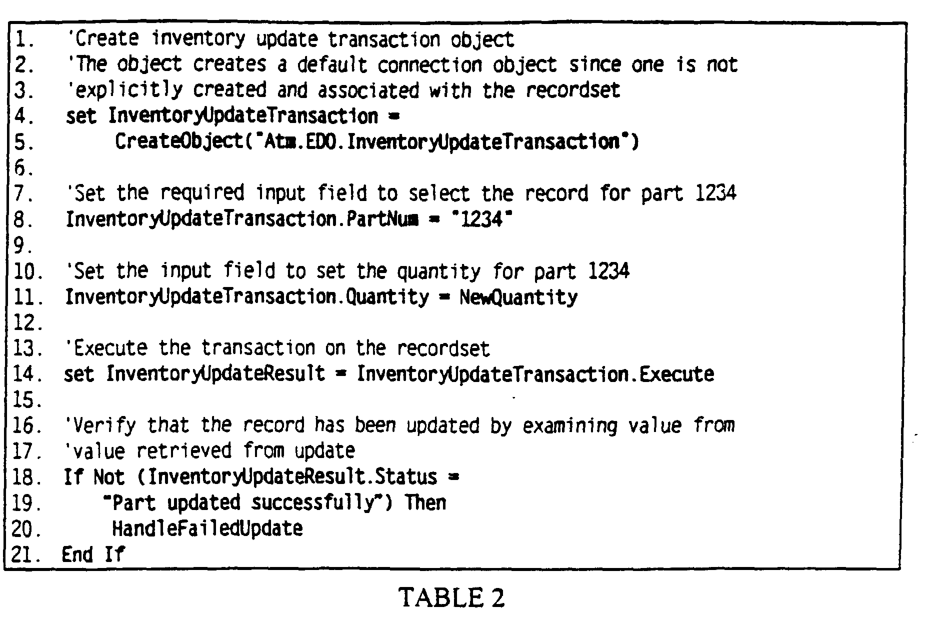

The data produced by the host application 203 will be provided to the user application 200 through the EDO 700 for display in accordance with the display mechanism provided by the user application 200. For example, the user application 200 may display this data in the well-known bar-chart format.

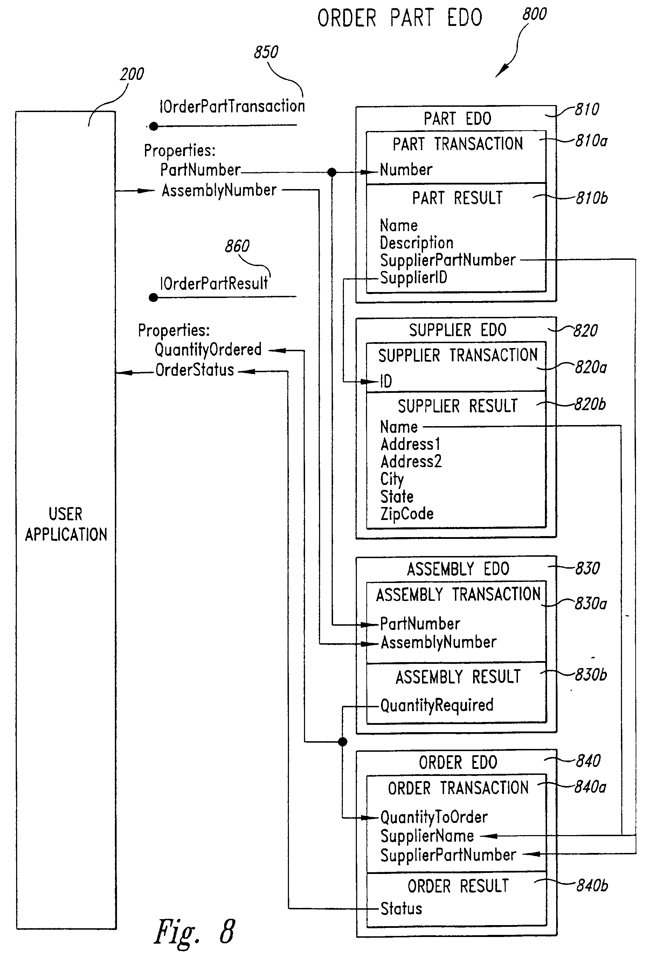

Figure 8 illustrates an exemplary compound EDO, according to an embodiment of the invention. An EDO author may create a compound EDO by combining two or more simple EDOs, as described above. A compound EDO allows a user application, such as the user application 200 shown in Figure 2, to perform complicated transactions with one or more host applications 203 in a manner transparent both to the user application 200 and to each of the host applications 203 involved. Compound EDOs are helpful because some data retrieval operations require multiple steps in order to retrieve a particular piece of data. For example, an operation to order a particular quantity of a particular part may require access to both a screen related to the part itself, and another screen related to an assembly number in which the part is contained.

Figure 8 illustrates an OrderPartEDO 800, an exemplary compound EDO for ordering a particular quantity of a particular part, comprising four simple EDOs. The OrderPartEDO 800 comprises a simple PartEDO 810, a simple SupplierEDO 820, a simple AssemblyEDO 830, and a simple OrderEDO 840. The PartEDO 810 comprises an authored transaction object ("PartTransaction") 810a and an authored result object ("PartResult") 810b. The SupplierEDO 820 comprises an authored transaction object ("SupplierTransaction") 820a and an authored result object ("SupplierResult") 820b. The AssemblyEDO 830 comprises an authored transaction object ("AssemblyTransaction") 830a and an authored result object ("AssemblyResult") 830b. The OrderEDO 840 comprises an authored transaction object ("OrderTransaction") 840a and an authored result object ("OrderResult") 840b.

In operation, the user application 200 inputs a part number and an assembly number to the transaction properties of the compound OrderPartTransaction 850. The simple PartEDO 810 receives the part number, which is then used to obtain a supplier ID for the SupplierEDO820. The user application 200 also provides an assembly number and the part number that are routed to the AssemblyEDO 830 to obtain a "quantity required" amount.

The compound OrderPartEDO 800 directs the relevant data produced from the PartEDO 810, the SupplierEDO820, and the AssemblyEDO830 into the OrderEDO 840. The relevant data here include the quantity required, the supplier name, and the supplier part number. The OrderPartEDO 800 then uses the data to place an order with the identified supplier for the specified quantity for the specified part number using the host application 203. The OrderResult object 840b returns an order status that is propagated to the OrderPartResult 860 property OrderStatus 866, which then may be retrieved by the user application 200. The same is true for the quantity required amount from the AssemblyEDO 830b. This data allows the user application 200 to reflect both the quantity ordered for a specified part and the present status of that order.

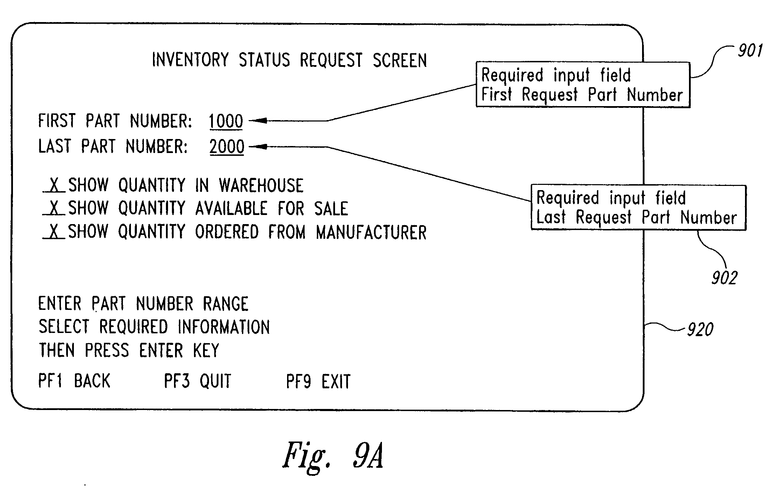

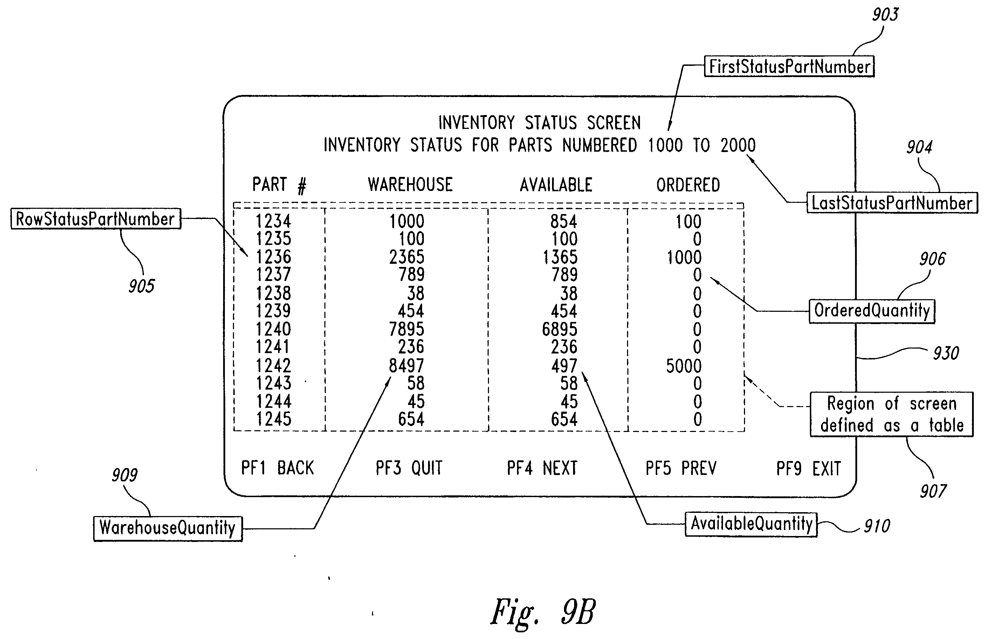

Figures 9A and 9B provide exemplary inventory status screens for tabular data from an inventory host computing application, which may be accessed by an EDO, according to an embodiment of the invention. In most respects, a tabular data EDO operates in the same manner as the simple EDOs shown in Figures 6A, 6B, 7A, and 7B and the compound EDO shown in Figure 8. As shown in Figure 9A, a tabular data EDO directs entry of a first part number in a required input field 901 of a starting screen 920 and directs entry of a last part number in a required input field 902. The tabular data EDO uses the first and last part numbers to access and retrieve the tabular data falling between the range indicated by these numbers ("1000" and "2000").

Figure 9B shows a sample data screen 930 depicting the inventory status for parts 1000 to 2000 in tabular data form. The column of RowStatusPartNumber fields 905 contains the part number of the part whose status is displayed in the remaining fields of the row. The column of WarehouseQuantity fields 909 provides the warehouse quantity for the part numbers in field 905. The column of AvailableQuantity fields 910 provides the available quantity field for the part numbers in field 905. The column of OrderQuantity fields 906 shows the ordered quantity for the part numbers in field 905. The data collection defining a table for the tabular EDO is indicated by dashed line 907. Using a tabular EDO, a user application, such as the user application 200, may retrieve the table indicated by the dashed line 907 and perform operations with the retrieved data such as the user application 200 performed operations upon the data retrieved from a simple EDO and a compound EDO.

As previously discussed, EDOs are also applicable to transaction-based data. Transaction-based EDOs operate in a manner similar to screen-based EDOs but rather than navigating to screens produced by a screen-based host application, they execute transactions against the host applications. Instead of exchanging keystrokes and screens with the host application, the transaction-based EDOs exchange formatted messages. The formatted messages sent by the EDO to the host application contain the specification of the transaction being requested and the inputs to the transaction. The formatted messages sent by the host application to the EDO contain the outputs of the transaction.

CICS is an IBM programming environment designed to allow data transactions entered at remote computers to be processed concurrently by a mainframe host computer. CICS-type EDOs are an example of transaction-based EDO. The CICS-type EDOs operate in a manner similar to screen-based EDOs but rather than navigating to screens produced by a screen-based host application, the CICS-type EDOs perform data transactions with the COMMAREA of a CICS application. The COMMAREA represents a CICS region for exchanging information with an external application.

The invention provides easy encapsulation for CICS host transactions written in compliance with CICS transaction interface ("TI") guidelines. Embodiments of the invention utilize synchronous messaging to receive inputs and return outputs from CICS applications. CICS-type EDOs may be defined to provide the data values contained in the recordset object of an transaction object as inputs to a transaction defined by a CICS application. Result messages from the host computing system may be mapped into the recordset object of an result object Since CICS itself provides a transaction server, the EDOs for CICS provide complete transaction semantics that support CICS rollback and commit procedures, assuming appropriate link level support is available with the CICS host computing system. A CICS-type EDO performs the mapping of the data values in the recordset objects to and from the input and output messages from the CICS transaction.

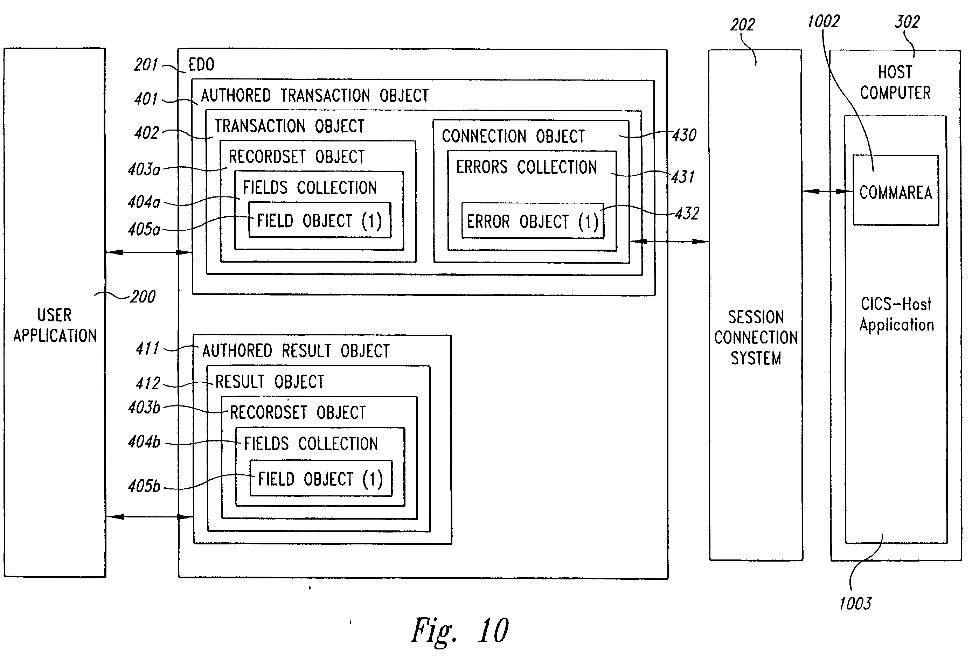

Figure 10 illustrates an exemplary transaction-based EDO 201, according to an embodiment of the invention. The main elements of the EDO 201 comprise the authored transaction object 401, the transaction object 402, the connection object 430, the authored result object 411 and the result object 412. As shown in Figure 10, the user application 200 utilizes the EDO 201 to perform data transactions with a CICS-host application 1003. As previously discussed, both the transaction object 402 and the result object 412 are recordset objects. The transaction recordset object 403a in the transaction object 402 represents a recordset table, and the fields collection 404a represents the field object collection for the transaction recordset object 403a. The fields collection 404a contains field objects, such as the field object 405a, that hold the values of the inputs of the transaction. As previously discussed, the transaction object 402 is further comprised of the Execute method 520, and the authored transaction object is further comprised of transaction properties 505.

The connection object 430 provides the EDO 201 with access to the session connection system 202. The session connection system 202 provides the EDO with the ability to connect to the CICS application 1303. The session connection system 202 establishes the communication session with the CICS application 1003. The session connections system 202 utilizes a COMMAREA 1002 to exchange messages with the host application 203. The connection object 430 further provides the EDO 201 with a capability for synchronizing its transactions with the CICS application 1003 and with other EDOs.

As previously discussed, embodiments of the connection object 430 utilize the Open method 585, the BeginTransaction method 581, the Close method 584, the errors collection property 431, the CommitTransaction method 582, the RollbackTransaction method 583, the CommunicationsTimeout property 586, and the Type property 590. Of course, the EDO 201 may also utilize other methods and properties with regard to the connection object 430, including methods for specifying to which CICS application the connection object 430 will connect.

The Execute method 520 again operates as a transaction executor invoking transmission of the input data from the transaction object 421 by the session connection system 202 to the CICS application 1003. Once the CICS application 1003 has processed the input data retrieved from the COMMAREA 1003, then the output data is sent back through the session connection system 202 and stored in the result object 412. The user application 200 may retrieve the result data from the EDO 201 using a result property, such as the result property 515.

The result object 412 includes the result property 515 and the result recordset object 403b, as previously discussed. The output data from the host application 203 stored in the recordset object 403b may be retrieved from a fields collection 404b or a result property 515 by the user application 200. The recordset object 403b includes result data in the fields collection 404b having the field object 405b. The result recordset object 403b represents a recordset table, and the fields collection 404b is an field object collection, as described above.

Embodiments of the present invention provide EDOs having common interface mechanisms between programming elements. Common interface mechanisms are desirable for programs operating on a single computer and are essential when splitting programming elements across a network. The present invention supports protocols such as the Component Object Model ("COM"), Distributed Component Object Module ("DCOM"), and OLE. These products are collectively marketed by Microsoft under the name ActiveX. COM provides a specification for building software elements that can be assembled into programs or add functionality to existing programs running on Microsoft Windows platforms. DCOM stipulates how COM components communicate over Windows-compatible networks. DCOM permits the distribution of different portions of a single computer program across two or more networked computers. Using DCOM, the computer program's distribution across a network is not apparent to the user.

The present invention also supports the Common Object Request Broker Architecture ("CORBA"), used by companies such as IBM, Sun, and Apple. CORBA allows objects from one program to communicate with objects in other programs even if the two programs are written in different programming languages and run on different computing platforms. A program requests objects through an object request broker ("ORB") and does not need to understand the structure of the program containing the object.

Using object models, such as CORBA and DCOM, embodiments of the present invention provide an EDO programming environment having no specific language requirements for its constituent elements. Programmers may use any supported language, such as C, C⁺⁺, Visual Basic ("VB"), Visual Basic Script ("VBScript"), Java, or JavaScript to manipulate and interact with EDOs.

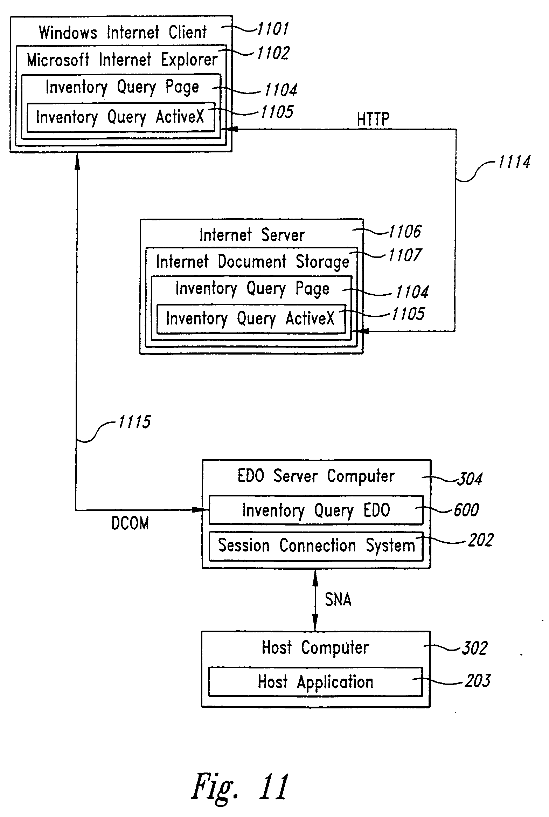

Figure 11 provides an exemplary simple EDO applied to a user application operating over the Internet, according to an embodiment of the invention. A Windows Internet client 1101 utilizes a Microsoft Internet Explorer program 1102 to send a request over a Hypertext Transfer Protocol ("HTTP") connection 1114 to an Internet server 1106 in order to access an Internet document storage medium 1107. The Internet document storage medium 1107 contains an inventory query page 1104 that includes a inventory query ActiveX control 1105. The inventory query ActiveX control 1105 accesses an inventory query EDO 600 on an EDO server computer 304 over a DCOM connection 1115. The EDO server computer 304 also includes a session connection system 202. The session connection system 202 interfaces with a host computing system 302 that includes a legacy screen-based inventory application 203, such as the screen-based inventory application shown in Figure 6A. In this embodiment of the invention, the session connection system 202 utilizes IBM's Systems Network Architecture ("SNA") to interact with the host computing system 302 having the screen-based inventory application 203.

Because the inventory query EDO 600 supports DCOM interfaces, the inventory query ActiveX control 1105 may be run either on the EDO server computer 304 or on a client operating across a network, such as the Internet. This flexibility provides an IS department with the ability to distribute applications and provide access to EDOs on desktop computers throughout the corporation while still maintaining centralized administration of the communications to the host. An exemplary session connection system 202 suitable for use with the present invention is described in U.S. Patent Application No. , "METHOD AND SYSTEM FOR A SESSION ALLOCATION MANAGER," filed on , which is assigned to a common assignee, and hereby incorporated by reference.

The EDO server computer 304 may use Black Ruby objects, which are pieces of a communications object architecture developed and maintained by the Attachmate Corporation. The EDO server computer 304 provides an interface to a session on a host, such as the interface provided to the screen-based inventory application 203. The EDO server computer 304 provides the session interface by utilizing a number of Black Ruby objects that work in collaboration to produce the session data. While this exemplary embodiment of the invention has been discussed in terms of the EDO server computer 304 and the session connection system 202, the present invention is not limited to use only with these elements and may be used with any combination of elements that provide an interface with a host computing application such as has been discussed.

EDOs support DCOM and CORBA distributed object interfaces, as previously discussed. These interfaces provide programmers with considerable latitude in the deployment of EDO-based solutions. A customer-written application, such as the inventory query ActiveX control 1105, may be run on the same computer as the inventory query EDO 202. Alternatively, the customer-written application may be run on a client computer that accesses a server containing the EDOs. Thus, the distribution of EDOs between a client and a server may be optimized by the programmer for a particular environment. In other words, some EDOs may be run on the client while others may be run on the server, depending on the particular requirements of the systems deployed.

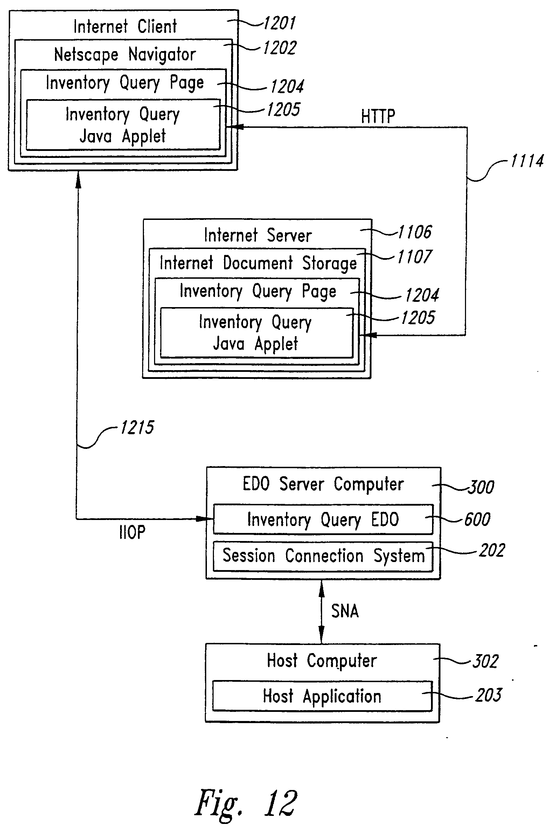

Figure 12 illustrates an exemplary EDO deployed in a Netscape environment over the Internet, according to an embodiment of the invention. An Internet client 1201 uses a Netscape Navigator program 1202 to access the Internet server 1106 having the Internet document storage medium 1107. The Internet document storage medium 1107 accesses an inventory query page 1204 having a inventory query Java Applet window 1205. The Internet server 1106 uses the HTTP connection 1114 to provide the inventory query page 1204 and the inventory query Java Applet window 1205 to the Netscape Navigator program 1202. In this embodiment of the invention, the inventory query Java Applet window 1205 utilizes an Internet Inter-ORB protocol ("IIOP") connection 1215 to communicate with the EDO server computer 304. The EDO server computer 304 includes the inventory query EDO 600 that interfaces with the session connection system 202. In this embodiment of the invention, the session connection system 202 utilizes IBM's SNA to interact with the host computing system 302 having the screen-based inventory application 203.

The EDO system shown in Figure 12 operates as follows for an inventory application such as that shown in Figures 1A, 1B, and 1C. The Netscape Navigator program 1202 sends a request through the inventory query page 1204, a Hypertext Markup Language ("HTML") page, through the HTTP connection 1114 that retrieves the inventory query Java Applet window 1205 from the Internet server 1106. The user interface of the inventory query Java Applet window 1205 prompts the Netscape Navigator user for a part number, such as the part number in the required input field 101 shown in Figure 1A. Using CORBA/IIOP requests to the inventory query EDO 600 located on the EDO server computer 304, the inventory query Java Applet 1205 requests inventory information for the part number of interest to the user. The inventory query EDO 600 in turn uses the session connection system 202 to navigate the host application 203, located on the host computing system 302, to the particular screen containing the user-requested information.

As previously discussed, an EDO author may create a simple EDO by invoking an EDO authoring tool. The EDO authoring tool guides the EDO author through locating a navigation data source and mapping the inputs and outputs of the transactions into transaction and result properties of the EDO. A transaction data source may include a screen navigation database, a CICS COMMAREA message map, the specifications of other EDOs, or any other data source that defines the inputs and outputs of a transaction. The product of the EDO authoring process is an EDO specification that can be used to build the EDO. The EDO specification does not implement the EDO, but instead provides a functional description of the EDO.

When the EDO author has created the desired EDO specification using the EDO authoring tool, the EDO author may save the EDO specification in an EDO specification document The EDO specification document contains data that describes the methods, properties, and the navigation and/or transaction orders intended for the host computer. By saving the EDO specification, the EDO author may return at a later time and modify the EDO specification. The EDO specification may also be used to generate new interfaces for an existing EDO at a later time. For example, the EDO specification for an existing EDO may be reloaded into the authoring tool which may then be used to produce the new interface.

To generate an implementation of the EDO's objects, an EDO generator component uses input from the EDO specification file and creates any necessary files for compiling and linking the EDO executable module. The files created by the EDO generator are provided to a development tool for compilation and linking into an executable module.

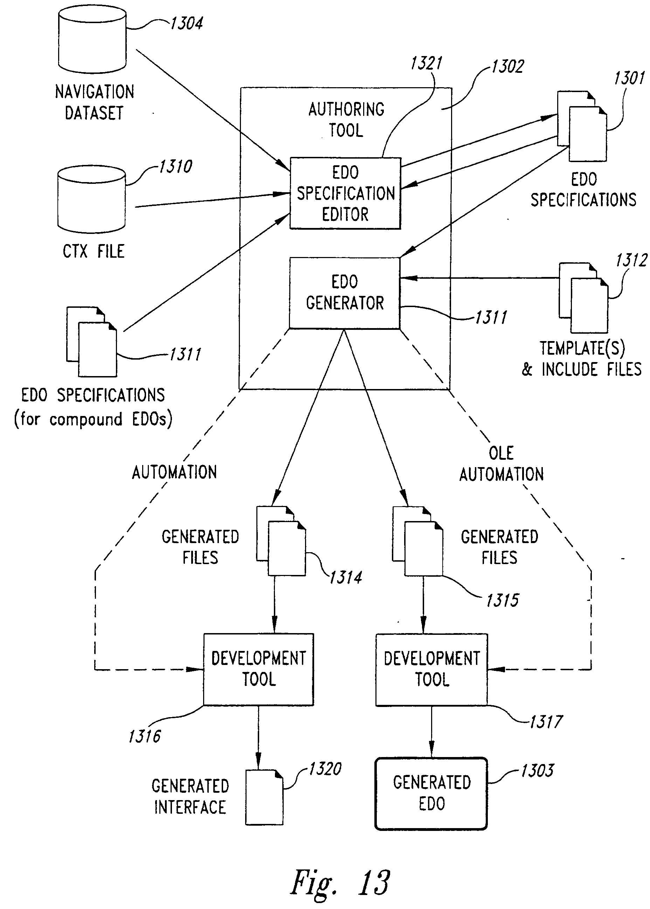

Figure 13 illustrates an exemplary EDO authoring tool for creating EDOs, according to an embodiment of the invention. An exemplary EDO authoring tool 1302 comprises an EDO specification editor 1321 and an EDO Generator 1311. The EDO authoring tool 1302 may comprise an ActiveX document embedded in VisualDev to edit the EDO specification and handle the EDO creation, according to an embodiment of the invention.

The EDO specification editor 1321 may receive specification data for an EDO from a transaction data source 1304. For screen-based EDOs, the transaction data source may be a navigation data source 1304 containing screen identification criteria and screen transition definitions. For CICS-type EDOs the transaction data source may be a transaction datasource 1310 containing COMMAREA message maps. For compound EDOs the transaction data source may be an EDO specifications file 1311. The EDO specification editor 1321 utilizes the transaction data source, as appropriate, together with user-provided information to produce an EDO specifications file 1301. The EDO specification editor 1321 may later revise the EDO specifications file 1301, if desired.

If data from a host computing system is accessed through terminal screens, such as the screens shown in Figures 1A, 1B, and 1C, the EDO specifications editor 1321 builds the EDO specification from the navigation data source 1304. Screen navigation data in the navigation data source 1304 has been previously collected by a recording tool (not shown). The EDO specification editor 1321 provides drag-and-drop techniques that allow EDO authors, to select the screen fields in the host computing system that become the EDOs' properties.

For CICS-type transaction objects, the EDO authoring tool 1302 builds the EDO from the message maps of the transactions' COMMAREA. The COMMAREA represents a CICS region for exchanging information with an external application. The EDO specifications editor 1321 again provides EDO authors with drag-and-drop techniques for selecting inputs and outputs that become the EDOs' properties.

For compound transaction objects, the EDO authoring tool 1302 builds the EDO from existing EDO specifications. The EDO specifications editor 1321 again provides EDO authors with drag-and-drop techniques for selecting inputs and outputs that become the EDOs' properties.

When the EDO specification file 1301 is complete, the EDO generator 1311 writes the necessary code and creates an EDO based on the information in the EDO specifications file 1301 and information from template(s) and include files 1312.

The EDO generator 1311 produced generated interface files 1314 and generated module files 1315. A development tool 1317 receives the generated module files 1315 and utilizes them to produce a generated EDO 1303. The generated EDO 1303 may then be deployed on the EDO server computer 304 shown in Figure 3A and 3B. A development tool 1316 uses the generated interface files 1314 to produce a generated interface 1320 for the computing environment into which the generated EDO 1303 will be deployed.

Alternatively, at user request the EDO generator 1311 may communicate directly with the development tool 1311 and the development tool 1317 to produce the generated interface 1320 and the generated EDO 1300.

The present invention supports a wide variety of development environments. In addition, embodiments of the invention provide special support wizards for certain target environments that require the utmost in usability, such as special integration wizards for Microsoft Visual Studio for COM-based EDOs and Symantec Visual Café for Java-based EDOs. The COM object created is an in-process COM server that may be accessed through COM or DCOM. For Java environments, embodiments of the EDO authoring tool create a Java bean that matches the specifications for a given EDO. As a COM object, the EDO is a reusable distributed object. A Design Time Control ("DTC") is also available for integration with Microsoft's InterDev. The DTC may create Active Server Pages ("ASPs") containing data for a host computing system for web browser presentation. Without EDOs, an ASP would be restricted to accessing data in a database using a Microsoft Active data object ("ADO"). If the data is not already in the database, it would require an application to place it there. Because EDOs can access data through screen interfaces, the data does not have to be replicated in order for an ASP to display the information.

While the present invention has been described with reference to a preferred embodiment thereof, those skilled in the art will appreciate that various changes in form and detail may be made without departing from the intended scope of the present invention as defined in the appended claims. For example, the structure of the EDOs may differ from those shown in the drawings. The EDOs' actual communications connections with a user application and a host computing system may differ from the functional description described above. Moreover, various aspects of the invention may even be comprised of micro-code provided in various pieces of hardware equipment, provided that the collective operation of the system functions in the manner that has been described. An example of an alternate embodiment would be one in which CORBA, instead of COM, was used to provide the distributed object communications, or where the EDO objects were implemented in Java. In addition, a skilled programmer having knowledge of the EDO and its related elements may also be able to create a system that functions in a manner similar to the EDO system using other computing elements. The EDO author, a creator of a simple EDO, and the EDO programmer, a programmer who writes programs using EDOs, may, of course, be the same person or different persons.

Further aspects of the invention are described in the following copending application, which is assigned to a common assignee: U.S. Patent Application No. , "METHOD AND SYSTEM FOR A SESSION ALLOCATION MANAGER," filed on . The above U.S. Patent Application is hereby incorporated by reference.

Although specific embodiments of, and examples for, the invention are described herein for illustrative purposes, various equivalent modifications are possible within the scope of the invention, as will be recognized by those skilled in the relevant art. The teachings provided herein of the invention can be applied to other legacy and enterprise computing systems, not necessarily the exemplary legacy systems described above. Various exemplary computing systems, and accordingly various other system configurations can be employed under embodiments of the invention. The embodiments of the invention disclosed herein have been discussed with regard to computerized network installations, such as those using large centralized computing systems. However, the invention finds equal applicability in other computing systems, such as small, potable computerized systems and even hand-held computing devices. The invention also finds applicability in a network of telecommunications devices that both send and receive voice and data communications.

In general, in the following claims, the terms used should not be construed to limit the invention to the specific embodiments disclosed in the specification and the claims, but should be construed to include all enterprise data objects and EDO-styled systems that operate in accordance with the claims. Accordingly, the invention is not limited by the disclosure, but instead its scope is determined by the following claims.

## Claims

1. A system for transfering data between a first computer program and a second computer program without regard to the data access method on the first computer, comprising:
a transaction object that has been configured to accept input data from the second computer program for transmission to the first computer program;
a result object that has been configured to present output data received from the first computer program to the second computer program;
a recordset object which the transaction object and the result object derive from for the storage of input or output data as a recordset table; and
a connection object that has been configured to transmit the input data to the first computer program and receive output data from the first program.

2. The system of claim 1 wherein the connection object has been configured to establish and terminate a data connection with the first computer program.

3. The system of claim 1 wherein the transaction object has been configured to direct transmission of the output data to the result object.

4. The system of claim 1 wherein the transaction object has been configured to direct transmission of the input data to the second computer.

5. The system of claim 1 wherein the first computer program has a first state prior to receiving the input data and a second state after receiving the input data and wherein the connection object has been further configured to rollback the first computer program to the first state from the second state after the first computer program has received the input data.

6. The system of claim 1 wherein the first computer program has a first state prior to receiving the input data and a second state after receiving the input data and wherein the connection object has been further configured to commit the first computer program to the second state after the first computer program has received the input data.

7. The system of claim 1, further comprising:
at least one transaction property that has been configured to store the input data from the second computer program in the recordset object of the transaction object.

8. The system of claim 1, further comprising:
at least one result property that has been configured to present the output data from the recordset object of the result object to the second computer program.

9. The system of claim 1, further comprising:
an executor that has been configured to engage the transmission of the input data from the transaction object to the first computer program, the reception of output data from the first computer program, the storage of the output data in the result object.

10. The system of claim 1 wherein the first computer program is a screen-based computer program and the connection object has been configured to navigate to a data screen of the screen-based computer program and to deposit the input data to the data screen.

11. The system of claim 10 wherein the connection object has been further configured to navigate to a data screen of the first computer program and retrieve the output data.

12. The system of claim 10 wherein the connection object has been further configured to navigate to a starting screen of the first computer program before navigation to the data screen.

13. The system of claim 10 wherein the connection object has been further configured to navigate to a final screen of the first computer program after navigation to the data screen.

14. The system of claim 10 wherein the connection object has been further configured to deposit input data on the screens encountered navigating to the starting screen.

15. The system of claim 10 wherein the connection object has been further configured to deposit input data on the screens encountered navigating to the data screen.

16. The system of claim 10 wherein the connection object has been further configured to deposit input data on the screens encountered navigating to the final screen.

17. The system of claim 1 wherein the first computer program is a customer information control system ("CICS") and wherein the connection object has been configured to access a COMMAREA associated with the first computer program and further configured to deposit the input data into the COMMAREA.

18. The system of claim 17 wherein the connection object has been further configured to access the COMMAREA to retrieve the output data.

19. The system of claim 1 wherein the first computer program is a database program and wherein the connection object has been configured to utilize a database input format associated with the first computer program and further configured to transmit the input data into the first computer program.

20. The system of claim 19 wherein the connection object has been further configured to utilize a database output format associated with the first computer program and configured to provide the output data.

21. The system of claim 1 wherein the first computer program has a data format and wherein the connection object has been further configured to format the input data to the first computer program in the data format.

22. The system recited in claim 1 wherein the transaction object has been configured to transmit input data to the first computer program from a third computer program.

23. The system recited in claim 1 wherein the first computer program is a screen-based program and the connection object has been configured to access a navigation data source that identifies a navigation path to a starting screen on the first computer program.

24. The system recited in claim 1 wherein the first computer program is a screen-based program and the connection object has been configured to access a navigation data source that identifies a navigation path to a data screen on the first computer program.

25. The system recited in claim 1 wherein the first computer program is a screen-based program and the connection object has been configured to access a navigation data source that identifies a navigation path to a final screen on the first computer program.

26. The system recited in claim 1 wherein the connection object utilizes at least one of navigation paths to a screen on the screen-based host computer, required input values needed to reach the screen, and passwords needed for accessing the screen.

27. The system recited in claim 1 wherein the transaction object and the result object have been configured to operate in conjunction with at least one other transaction object and at least one other result object.

28. The system recited in claim 1 wherein the result object stores a set of output data from the first computer program.

29. The system recited in claim 28 wherein the set of output data has a tabular format.

30. The system recited in claim 1 wherein the transaction object includes a virtual field representing a transaction property that updates or retrieves the value of one or more of the other transaction properties..

31. The system recited in claim 1 wherein the connection object further comprises an errors collection for the storage of error objects used for reporting transaction errors.

32. The system recited in claim 1 wherein the transaction object determines that all necessary input data has been obtained from the second computer program for accessing the first computer program.

33. A method for transferring data between a first computer program and a second computer program, without regard to the data access method on the first computer, comprising:
storing input data from the second computer program into a transaction object;
transmitting input data to the second computer program from a transaction object using a connection object;
receiving output data from the first computer using a connection object;
storing output data received from the first computer in a result object; and
presenting the output data from the first computer to the second computer using a result object.

34. The method of claim 33, further comprising opening a data connection with the first computer program using the connection object.

35. The method of claim 33, further comprising directing transmission of the output data into the result object using the connection object.

36. The method of claim 33 wherein the first computer program has a first state prior to receiving the input data and a second state after receiving the input data, further comprising rolling back the first computer to the first state from the second state after the first computer program has received the input data using the connection object.

37. The method of claim 33, further comprising transmitting the input data from the second computer program to the transaction object using at least one set object.

38. The method of claim 33, further comprising transmitting the output data from the result object to the second computer program using at least one get object.

39. The method of claim 33, further comprising:
retaining the input data to the first computer program in a transaction recordset object in the transaction object; and
retaining the output data to the second computer program in a result recordset object in the result object.

40. The method of claim 39 wherein the transaction recordset object and the result recordset object have been derived from a recordset object type.

41. The method of claim 33, further comprising engaging the transmission of the input data from the transaction object to the first computer program using an execute procedure.

42. The method of claim 33 wherein the first computer program is a screen-based computer program, further comprising navigating to a data screen of the screen-based computer program and depositing the input data to the data screen using the connection object.

43. The method of claim 42, further comprising navigating to an update screen of the screen-based computer program and retrieving the output data using the connection object.

44. The method of claim 33 wherein the first computer program is a customer information control system ("CICS"), further comprising accessing a COMMAREA area associated with the first computer program and depositing the input data into the COMMAREA using the connection object.

45. The method of claim 44, further comprising accessing the COMMAREA to retrieve the output data using the connection object.

46. The method of claim 33 wherein the first computer program is a database program, further comprising transmitting the input data into the first computer program using the connection object, wherein the connection object has been configured to utilize a database input format associated with the first computer.

47. The method of claim 46 wherein the connection object has been further configured to utilize a database output format associated with the first computer program, the method further comprising retrieving the output data using the connection object.

48. The method of claim 33 wherein the first computer program has a data format, further comprising formatting the input data to the first computer program in the data format using in the connection object.

49. The method of claim 33 wherein the transaction object encapsulates data and procedures for retrieving input data from the second computer program and the result object encapsulates data and procedures for sending output data to the second program.

50. The method recited in claim 33, further comprising:
transmitting the output data from the first computer program to a third computer program using the transaction object.

51. The method recited in claim 33 wherein the first computer program is a screen-based program, further comprising accessing by the connection object a navigation data set that identifies a navigation path to a starting screen on the first computer program.

52. The method recited in claim 33, further comprising:
providing the connection object with at least one of navigation paths for reaching a screen of first computer program, transition identifications for reaching the first computer program, required input values needed for reaching the host computer program, passwords for reaching the first computer program, and security information required for receiving the output data.

53. The method recited in claim 33, further comprising:
configuring the transaction object and the result object to operate in conjunction with at least one other transaction object and at least one other result object.

54. The method recited in claim 33 wherein the result object accesses a set of output data from the first computer program.

55. The system recited in claim 54 wherein the set of output data has a tabular format.

56. The method recited in claim 33 wherein the transaction object includes a virtual field representing an unspecified data type, further comprising transmitting the unspecified data type in the virtual field to the first computer program.

57. The method recited in claim 33, further comprising:
reporting transaction errors to an error object in the transaction object.

58. The method recited in claim 33, further comprising:
determining that all necessary input data has been obtained for accessing the first computer program.

59. The method recited in claim 33, further comprising:
creating the transaction object and the result object in a first computing system, wherein the first computer program resides in a second computing system and the second computer program resides in a third computing system.

60. A data structure in a computer-readable medium comprising computer-readable instructions for transferring data, between a first computer program on a first computer and a second computer program on a second computer, the data structure comprising:
a transaction object that encapsulates data and procedures that receive input data from the second computer program for transmission to the first computer program;
a result object that encapsulates data and procedures that receive output data from the first computer program; and
a connection object that encapsulates data and procedures that transmit the input data to the first computer program.

61. The data structure of claim 60 wherein the connection object further encapsulates data and procedures that open a data connection with the first computer program.

62. The data structure of claim 60 wherein the connection object further encapsulates data and procedures that direct transmission of the output data to the result object.

63. The data structure of claim 60 wherein the first computer program has a first state prior to receiving the input data and a second state after receiving the input data and wherein the connection object further encapsulates data and procedures that rollback the first computer to the first state from the second state after the first computer program has received the input data.

64. The data structure of claim 60, further comprising:
at least one set object that encapsulates data and procedures that transmit the input data from the second computer program to the transaction object.

65. The data structure of claim 60, further comprising:
at least one get object that encapsulates data and procedures that transmit the output data from the result object to the second computer program.

66. The data structure of claim 60 wherein the transaction object further comprises a transaction recordset object that has been configured to retain the input data to the first computer program and wherein the result object further comprises a recordset object that has been configured to retain the output data from the first computer program.

67. The data structure of claim 60, further comprising:
an execute procedure that encapsulates data and procedures that have been configured to engage the transmission of the input data from the transaction object to the first computer program.

68. The data structure of claim 60 wherein the first computer program is a screen-based computer program and the connection object further encapsulates data and procedures that have been configured to navigate to a data screen of the screen-based computer program and to deposit the input data to the data screen.

69. The data structure of claim 68 wherein the connection object further encapsulates data and procedures that have been configured to navigate to an update screen of the screen-based computer program and retrieve the output data.

70. The data structure of claim 60 wherein the first computer program is a customer information control system ("CICS") and wherein the connection object encapsulates data and procedures that have been configured to access a COMMAREA associated with the first computer program and configured to deposit the input data into the COMMAREA.

71. The data structure of claim 60 wherein the connection object further encapsulates data and procedures that have been configured to access the COMMAREA to retrieve the output data.

72. The data structure of claim 60 wherein the first computer program is a database program and wherein the connection object encapsulates data and procedures that have been configured to utilize a database input format associated with the first computer program and configured to input the input data into the first computer program.

73. The data structure of claim 72 wherein the connection object further encapsulates data and procedures that have been configured to utilize a database output format associated with the first computer program and configured to provide the output data.

74. The data structure of claim 60 wherein the first computer program has a data format and wherein the connection object has been further configured to format the input data to the first computer program in the data format.

75. The data structure recited in claim 60 wherein the data and procedures in the transaction object have been configured to transmit input data to the first computer program from a third computer program.

76. The data structure recited in claim 60 wherein the first computer program is a screen-based program and wherein the connection object further encapsulates data and procedures that access a navigation data source that identifies a navigation path to a starting screen on the first computer program.

77. The data structure recited in claim 60 wherein the connection object further encapsulates data and procedures that utilize at least one of navigation paths to a screen on the screen-based host computer, required input values needed to reach the screen, and passwords needed for accessing the screen.

78. The data structure recited in claim 60 wherein at least one procedure encapsulated in the transaction object and at least one procedure encapsulated in the result object have been configured to operate in conjunction with at least one other transaction object and at least one other result object.

79. The data structure recited in claim 60 wherein the result object further comprises data and procedures that access a set of output data from the first computer program.

80. The data structure recited in claim 79 wherein the set of output data has a tabular format.

81. The data structure recited in claim 60 wherein the data encapsulated in the transaction object includes a virtual field representing an unspecified data type that may be transmitted between the first computer program.

82. The data structure recited in claim 60 wherein the transaction object further comprises data and procedures that determine that all necessary input data has been obtained for accessing the first computer program.

83. An authoring tool that prepares enterprise data objects for data transmissions between a first computer program and a second computer program, comprising:
a specification editor that receives characteristics data for a new enterprise data object, identifies locations on the first computer program corresponding to the characteristics data, and produces a specification set that includes the characteristics data and the identified locations; and
an authoring tool that receives the specification set and produces an enterprise data object that encapsulates data and procedures for transmitting data between the first computer program and the second computer program.

84. The authoring tool recited in claim 83 wherein the first computer program is a screen-based computer program, the authoring tool further comprising:
a navigation data set that provides the specification editor with the identified locations on the first computer program.

85. The authoring tool recited in claim 83 wherein the first computer program is a customer information control system ("CICS"), the authoring tool further comprising:
a CICS data set that provides the specification editor with the identified locations on the first computer program.

86. The authoring tool recited in claim 83 wherein the specification editor combines at least two specification sets to produce a compound specification set and wherein the EDO generator utilizes the compound specification set to produce an enterprise data object.

87. The authoring tool recited in claim 83 wherein the enterprise data object produced by the EDO generator is in object code.

88. The authoring tool recited in claim 83 wherein the enterprise data object produced by the EDO generator is in executable code.

89. The authoring tool recited in claim 83, further comprising:
an instruction receiver for receiving instructions from a programmer regarding the characteristics data for the new enterprise data object.

90. A system for transferring data between a first computer program and a second computer program, comprising:
a transaction object that has been configured to accept input data from the second computer program for transmission to the first computer program;
a result object that has been configured to present output data received from the first computer program to the second computer program;
a connection object that has been configured to transmit the input data to the first computer program without regard to data access procedures associated with the first computer program.

91. A data transmission system, comprising:
a first enterprise data object comprising first data and first procedures for engaging in first data transactions that utilize first input data to provide first output data;
a second enterprise data object comprising second data and second procedures for engaging in second data transactions that utilize second input data to provide second output data; and
a third data enterprise object comprising third data and third procedures that provide at least a portion of the first output data as at least a portion of the second input data to the second enterprise data object.

92. The system of claim 91 wherein at least one of the first data transactions and the second data transactions involve data transactions with one of a screen-based computer program, a database program, or a customer information control system ("CICS").

93. The system of claim 91 wherein the first data transactions involve data transactions with a screen-based computer program and the second data transactions involve data transactions with at least one of a database program and a customer information control system ("CICS").

94. A system for transferring data between a first computer program and a second computer program, comprising:
a transmitter that has been configured to accept input data in a first format from the second computer program for transmission to the first computer program, wherein the first format is a data format associated with the second computer program; and
a connector that has been configured to transmit the input data in the first format from the transmitter to the first computer program in a second format suitable for the first computer program, wherein the connector provides the input data to the first computer program without regard to data access methods provided by the first computer.

95. The system of claim 94, further comprising:
an authored transmitter that includes the transmitter and at least one custom interface for at least one input of the input data to the transmitter.

96. The system of claim 94 wherein the second data format is at least one of a screen-based data format, a database format, or a CICS format.

97. The system of claim 94, further comprising:
a receiver that has been configured to present output data received from the first computer program to the second computer program in the first data format.

98. The system of claim 97, further comprising:
an authored receiver that includes the receiver and at least one custom interface for at least one output of the output data to the second computer program.

99. The system of claim 97, further comprising:
a recordset object comprising data and procedures that organize data in a tabular format wherein the transmitter and receiver both derive from the recordset object.

100. A method for transfening data between a first computer program and a second computer program, comprising:
storing input data from the first computer program into a transaction object; and
transmitting the input data to the second computer program from the transaction object using a connection object, wherein the connection object provides the input data to the second computer program without regard to data access methods associated with the second computer program.

101. The method of claim 100 wherein the input data changes at least one of a status or data associated with the second computer program.

102. The method of claim 100, further comprising:
receiving output data from the second computer, wherein the output data is received without regard to data access methods associated with the second computer program; and
storing output data received from the second computer in a result object.

103. The method of claim 102, further comprising:
providing the output data to the first computer program from the result object.

104. A method for transferring data and instructions between a web browser and a computer program, comprising:
accessing an enterprise data object from a storage facility by the web browser;
receiving at least one of data and instructions into the accessed enterprise data object from the web browser; and
transmitting the at least one of data and instructions to the computer program by the accessed enterprise data object without regard to data access methods associated with the computer program.

105. The method of claim 104, further comprising:
receiving data from the computer program by the accessed enterprise data object; and
preparing the received data for presentation to the web browser by the accessed enterprise data object.

106. The method of claim 106, further comprising:
presenting the prepared data to the web browser by the accessed enterprise data object.

107. The method of claim 104 wherein the computer program is one of a screen-based computer program, a database program, or a customer information control system ("CICS").

108. A computer-readable medium having computer-executable instructions for performing steps, comprising:
storing input data from a first computer program into a transaction object;
transmitting the input data to a second computer program from the transaction object using a connection object, wherein the connection object transmits the input data without regard to data access methods associated with the second computer;
receiving output data from the first computer; and
storing output data received from the first computer in a result object.

109. A data structure in a computer-readable medium comprising computer-readable instructions for transferring data between a first computer program on a first computer and a second computer program on a second computer, the data structure comprising:
a transaction field that encapsulates data and procedures that receive input data from the second computer program for transmission to the first computer program;
a result field that encapsulates data and procedures that receive output data from the first computer program; and
a connection field that encapsulates data and procedures that transmit the input data to the first computer program.

110. An enterprise data object comprising, comprising:
an object that encapsulates methods for accessing data on a host computer; and
a presentation interface that presents data accessed from the host computer.
